(19) Europäisches Patentamt
European Patent Office
Office européen des brevets

(11) **EP 4 325 391 A1**

(12) **EUROPEAN PATENT APPLICATION**
published in accordance with Art. 153(4) EPC

(43) Date of publication:
**21.02.2024 Bulletin 2024/08**

(21) Application number: **21946504.4**

(22) Date of filing: **25.06.2021**

(51) International Patent Classification (IPC):
**G06F 30/30** (2020.01)

(52) Cooperative Patent Classification (CPC):
**G06F 30/30**

(86) International application number:
**PCT/CN2021/102391**

(87) International publication number:
**WO 2022/267010 (29.12.2022 Gazette 2022/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Longgang**
**Shenzhen, Guangdong 518129 (CN)**

(72) Inventors:
• **LI, Ding**
  **Shenzhen, Guangdong 518129 (CN)**

• **HU, Yisheng**
  **Shenzhen, Guangdong 518129 (CN)**
• **DING, Chongjun**
  **Shenzhen, Guangdong 518129 (CN)**
• **FANG, Shangxia**
  **Shenzhen, Guangdong 518129 (CN)**
• **LI, Zhichao**
  **Shenzhen, Guangdong 518129 (CN)**
• **MENG, Xianglong**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **CIRCUIT DESIGN METHOD AND RELATED DEVICE**

(57) This application provides a circuit design method and a related device, and is applicable to the field of integrated circuit technologies. The method includes: obtaining a first circuit diagram constructed based on a plurality of first components, where each first component includes a first parameter, and the first parameters are parameters that are used in a plurality of processes and that have normalized names; then obtaining indicators of electrical parameters of the plurality of first components based on the first circuit diagram; determining a plurality of second parameters based on the indicators of the electrical parameters of the plurality of first components, where the second parameters are in a one-to-one correspondence with the first parameters; then replacing the first parameters included in the first components with the second parameters, to obtain second components; and outputting a second circuit diagram constructed by the plurality of second components. According to the foregoing method, a process of adjusting a parameter of a circuit due to adjustment of an indicator of an electrical parameter or a PDK change, running simulation to view a result, and then performing readjustment is reduced, that is, a plurality of iteration operations can be reduced, thereby improving circuit design efficiency.

FIG. 2

## Description

## TECHNICAL FIELD

Embodiments of this application relate to the field of integrated circuit technologies, and in particular, to a circuit design method and a related device.

## BACKGROUND

With development of semiconductor technologies, a model that is in a process design kit (process design kit, PDK) provided by a semiconductor manufacturer in an advanced semiconductor process and that is used to perform simulation program with integrated circuit emphasis (Simulation Program with Integrated Circuit Emphasis, SPICE) simulation for a to-be-processed component becomes increasingly complex, that is, coupling between model parameters becomes increasingly greater. However, in a conventional design procedure of an analog integrated circuit, a circuit design specification (design specification (spec)) needs to be used as a design input. Based on the circuit design specification, a designer determines an approximate circuit structure and a parameter of a to-be-processed component through manual calculation and derivation by using simplified formulas of the circuit and the to-be-processed component in the process; then draws the circuit and builds a testbench (testbench) in electronic design automation (electronic design automation, EDA) software; and then repeatedly runs SPICE at a level of the to-be-processed component for circuit simulation, and performs iterative adjustment for a plurality of times based on a circuit output of a simulation result and a specification achievement status presented by a working status of the to-be-processed component. Due to the feature that coupling between model parameters becomes increasingly greater, it is difficult for the designer to estimate circuit performance indicators such as proper working statuses, noise, and nonlinearity of the circuit and the to-be-processed component through manual calculation by using simplified formulas. As a result, the designer relies on a SPICE simulation result to determine whether a working status of the circuit meets an expectation. However, in SPICE simulation, the working status of the circuit is obtained by solving a circuit equation. When the circuit and a component model are relatively complex, SPICE simulation is relatively time-consuming. SPICE simulation and iteration are repeatedly performed to determine an architecture of the circuit and the parameter of the to-be-processed component, to obtain expected performance. However, this process is quite time-consuming, that is, circuit design efficiency is relatively low.

Currently, a computer can be used to adjust a parameter of a to-be-processed component by using a mathematical optimization algorithm, to find an optimal design of a circuit based on a change of a simulation result. Generally, a user specifies a design space range (for example, a circuit structure, a type of a to-be-processed component, and a parameter selection range), a design specification indicator, and a weight. Computer software converts a design problem into a mathematical optimization problem, and solves the problem by using a numerical algorithm.

However, when there are excessive possible circuit design targets and constraints, it is difficult for an optimizer to provide a complete compromise among a relatively large quantity of targets and constraints in an appropriate time. Therefore, it is relatively difficult to determine a proper weight, and incorrect weight allocation causes an improper design. Therefore, a larger circuit scale leads to a more serious problem of the improper design, thereby reducing circuit design efficiency.

## SUMMARY

Embodiments of this application provide a circuit design method and a related device, to reduce a process of adjusting a process parameter of a circuit, running simulation to view a result, and then performing readjustment, that is, a plurality of iteration operations can be reduced, thereby improving circuit design efficiency.

According to a first aspect, this application provides a circuit design method. The method may be performed by a circuit design device, or may be performed by a chip configured in a circuit design device. This is not limited in this application. The method includes: A first circuit diagram constructed based on a plurality of first components is obtained. Specifically, a designer obtains the first components from a standard component library and constructs the first circuit diagram based on the first components, thereby completing an input of the first circuit diagram. Each first component includes a first parameter, and the first parameters are parameters that are used in a plurality of processes and that have normalized names. For example, the first component is a MOS component, and first parameters of the MOS component are a length (length) and a width (width). Based on this, indicators of electrical parameters (for example, indicators of unit gain bandwidth products, indicators of operational amplifier direct current gains, and indicators of load capacitance) of the plurality of first components are then obtained based on the first circuit diagram, and a plurality of second parameters are determined based on the indicators of the electrical parameters of the plurality of first components. The second parameters are parameters included in a process design kit PDK, and the second parameters are in a one-to-one correspondence with the first parameters. Based on this, the first parameters included in the first components are replaced with the second parameters, to obtain second components, where the second components include the second parameters. Finally, a second circuit diagram constructed by the plurality of second components is output.

In this implementation, the first circuit diagram constructed based on the plurality of first components and the indicators of the electrical parameters of the plurality of first components are separately obtained. In this case, the circuit diagram can be decoupled from an indicator of an electrical parameter of the circuit diagram. Therefore, the electrical parameter of the circuit diagram does not need to be adjusted when the indicator of the electrical parameter of the circuit diagram is adjusted. In addition, the first components include parameters that are used in a plurality of processes and that have normalized names, that is, a parameter included in a specifically used process design kit PDK is not considered. Electrical parameters of the second components are parameters included in the PDK. Therefore, the circuit diagram can be decoupled from the PDK. Therefore, the electrical parameter of the circuit diagram does not need to be adjusted either when the PDK changes. In a conventional technology, design space needs to be traversed by using an optimization algorithm, to obtain an optimal design result or several optimal outputs for the designer to select. When the indicator of the electrical parameter of the circuit diagram is adjusted or the PDK changes, the design space needs to be traversed for a plurality of times, to run simulation and determine, based on a result, whether the electrical parameter of the circuit diagram needs to be adjusted. However, in this solution, in the foregoing case, the electrical parameter of the circuit diagram does not need to be adjusted. Therefore, a plurality of iteration operations can be reduced, thereby improving circuit design efficiency.

In a possible implementation of the first aspect, the first circuit diagram includes a connection relationship between the plurality of first components, each first component includes a component feature, the connection relationship between the plurality of first components is a topological relationship formed by connecting ports of the plurality of first components by using a wire, and the component feature of the first component is a component attribute of the first component. Based on this, the indicator of the electrical parameter of the first circuit diagram is first obtained. The electrical parameter of the first circuit diagram may include but is not limited to an operational amplifier direct current gain, a unit gain bandwidth product, load capacitance, and the like. A specific electrical parameter of the first circuit diagram needs to be determined based on an actual requirement of a circuit design. Then, the indicator of the electrical parameter of the first circuit diagram is decomposed based on the connection relationship between the plurality of first components and the component feature of each first component, to obtain the indicators of the electrical parameters of the plurality of first components. Specifically, the indicators of the electrical parameters of the plurality of first components are calculated and output by using the connection relationship between the plurality of first components and the component feature of each first component and based on internal fixed formulas and parameter settings. The fixed formulas and the parameter settings are from a textbook or are output by the designer through experience summarization, or may be customized by the designer. This is not limited herein.

In this implementation, the indicator of the electrical parameter of the first circuit diagram is decomposed. The connection relationship between the first components and the component feature of each first component can be fully considered, to ensure proper decomposition of an indicator of a circuit parameter. Therefore, the obtained indicators of the electrical parameters of the plurality of first components can be closer to an actual indicator of each first component, so that reliability of the indicators of the electrical parameters of the first components is improved, thereby improving circuit design reliability.

In a possible implementation of the first aspect, the first circuit diagram includes the connection relationship between the plurality of first components, and each first component includes the component feature. Based on this, the plurality of second parameters can be determined based on the indicators of the electrical parameters of the plurality of first components, the connection relationship between the plurality of first components, and the component feature of each first component by using a formula and in a simulation decision manner; or the plurality of second parameters are determined based on the indicators of the electrical parameters of the plurality of first components, the connection relationship between the plurality of first components, and the component feature of each first component by using a component feature library lookup table.

In this implementation, in a process of determining the plurality of second parameters, the connection relationship between the first components and the component feature of each first component are further considered, so that accurate determining of the second parameters can be further ensured, thereby preventing the second parameters from being subsequently adjusted for a plurality of times due to excessively large deviations between the second parameters and actual parameters. Therefore, accuracy of determining the second parameters is improved, thereby improving efficiency of outputting the second circuit diagram, that is, improving circuit design efficiency. In addition, the second parameters are determined by using the formula and in the simulation decision manner, or by using the component feature library lookup table, thereby ensuring that the second parameters can be determined in different environments and different first circuit diagrams in actual application. On the basis of improvement in flexibility of determining the second parameters, reliability of determining the second parameters can be further improved, thereby improving circuit design flexibility and reliability.

In a possible implementation of the first aspect, before the first parameters included in the first components are replaced with the second parameters, to obtain the second components, the first circuit diagram can be further simulated based on the plurality of second parameters, to obtain a plurality of circuit simulation results of the first circuit diagram, where the plurality of circuit simulation results of the first circuit diagram are electrical parameters obtained by simulating all first components in the first circuit diagram. In addition, it is determined that the plurality of circuit simulation results of the first circuit diagram meet the indicators of the electrical parameters of the plurality of first components. In this case, the first parameters included in the first components are replaced with the second parameters, to obtain the second components.

In this implementation, when the plurality of circuit simulation results of the first circuit diagram meet the indicators of the electrical parameters of the plurality of first components, it indicates that the determined plurality of second parameters can reach indicators of a circuit design performed on the first circuit diagram. In this case, the second circuit diagram output based on the second parameters is a required circuit, thereby ensuring circuit design reliability.

In a possible implementation of the first aspect, the process design kit PDK including the plurality of component models is first obtained, where the PDK includes a plurality of component models. Then, the PDK is invoked to replace each first component in the first circuit diagram, to obtain a third circuit. In this case, the third circuit includes a plurality of third components, the third components are components obtained by replacing the first components with component models, and process parameters of the third components are the second parameters determined in the foregoing implementations. Then, each third component in the third circuit is simulated, to obtain the plurality of circuit simulation results of the first circuit diagram (for example, a simulation result of the operational amplifier direct current gain, a simulation result of the unit gain bandwidth product, and a simulation result of the load capacitance).

In this implementation, the PDK is invoked to replace the components, so that the first components that do not reflect actual process parameters are replaced with the third components that have actual process parameters. Simulation based on the third components can better implement circuit simulation in actual application and in a specific process. Therefore, the obtained plurality of circuit simulation results of the first circuit diagram are close to actual circuit running results, thereby ensuring accuracy of the circuit simulation results.

In a possible implementation of the first aspect, there are at least two types of simulation, and different types of simulation are used to obtain different circuit simulation results. It should be understood that the simulation types in this embodiment include but are not limited to alternating current (alternating current, AC) simulation, transient (transient, TRAN) simulation, direct current (direct current, DC) simulation, and the like.

In this implementation, different types of simulation are performed for different component features and connection relationships in the first circuit diagram, and obtained different types of simulation results can display features of the first circuit diagram in different dimensions. In addition, when an indicator of a circuit parameter is not met, it is further convenient to determine a specific second parameter that needs to be adjusted, and efficiency of adjusting the second parameter is improved, thereby improving circuit design accuracy and efficiency.

In a possible implementation of the first aspect, when it is determined that the plurality of circuit simulation results of the first circuit diagram do not meet the indicators of the electrical parameters of the plurality of first components, a plurality of second parameters are to be re-determined.

In this implementation, the plurality of circuit simulation results do not meet the indicators of the electrical parameters of the plurality of first components, that is, some of the determined plurality of second parameters may not reach indicators of a circuit design performed on the first circuit diagram. Therefore, the second parameters need to be readjusted, to ensure that the output second circuit diagram is a required circuit.

In a possible implementation of the first aspect, the first circuit diagram can be further divided to obtain a plurality of circuit sub-diagrams, where each circuit sub-diagram includes at least one first component, there are processing priorities for the plurality of circuit sub-diagrams, and the processing priorities indicate a sequence of simulating the plurality of circuit sub-diagrams.

For example, circuit diagram a circuit sub-diagram A, a circuit sub-diagram B, and a circuit sub-diagram C are obtained by dividing the first circuit diagram, and processing priorities for the circuit sub-diagram A, the circuit sub-diagram B, and the circuit sub-diagram C are the circuit sub-diagram A to the circuit sub-diagram C to the circuit sub-diagram B. In this case, in a subsequent parameter determining procedure, a parameter of the circuit sub-diagram A should be determined first, and when a simulation result of the circuit sub-diagram A meets a circuit indicator of the circuit sub-diagram A, parameter determining and simulation of the circuit sub-diagram C are further performed. When a simulation result of the circuit sub-diagram C meets a circuit indicator of the circuit sub-diagram C, parameter determining and simulation of the circuit sub-diagram B are further performed. This is the processing priority of each circuit sub-diagram.

In this implementation, the first circuit diagram is divided into the plurality of circuit sub-diagrams, and the circuit sub-diagram includes fewer first components than the first circuit diagram. When the first circuit diagram is a large-scale integrated circuit and includes a plurality of first components, parameter determining and simulation are separately performed on the plurality of circuit sub-diagrams based on the sequence of simulating the plurality of circuit sub-diagrams that is indicated by the processing priorities, and when a simulation result of a circuit sub-diagram meets a corresponding circuit indicator, parameter determining and simulation procedures of a next circuit sub-diagram are further performed. A time for simulation is less than a time for simulating the first circuit diagram. Therefore, the simulation time can be reduced, thereby improving circuit design efficiency.

In a possible implementation of the first aspect, a constraint of each circuit sub-diagram (for example, a percentage of contribution of a first component in the circuit sub-diagram to noise, and allocation of a first-stage gain and a second-stage gain in the circuit sub-diagram) and an optimization target (for example, an optimal area, optimal power consumption, and a quality factor value) of each circuit sub-diagram can be further obtained. The constraint is a change range of an electrical parameter of a first component included in the circuit sub-diagram, and the optimization target is a target value of an electrical parameter of the circuit sub-diagram. Based on this, the indicator of the electrical parameter of the first circuit diagram is first obtained, and then the indicator of the electrical parameter of the first circuit diagram is decomposed based on the constraint and the optimization target that are of each sub-diagram, to obtain the indicators of the electrical parameters of the plurality of first components.

In this implementation, the indicator of the electrical parameter of the first circuit diagram is decomposed. When the first circuit diagram is divided into the plurality of sub-diagrams, the change range of the electrical parameter of the first component included in each sub-diagram and the target value of the electrical parameter of the circuit sub-diagram can be fully considered, to ensure proper decomposition of an indicator of a circuit parameter. Therefore, the obtained indicators of the electrical parameters of the plurality of first components can be closer to an actual indicator of each first component, so that reliability of the indicators of the electrical parameters of the first components is improved, thereby improving circuit design reliability.

In a possible implementation of the first aspect, each sub-diagram includes a connection relationship between a plurality of first components, each first component includes a component feature, the connection relationship between the plurality of first components is a topological relationship formed by connecting ports of the plurality of first components by using a wire, and the component feature of the first component is a component attribute of the first component. Based on this, the plurality of second parameters are determined based on the indicators of the electrical parameters of the plurality of first components, the connection relationship between the plurality of first components, and the component feature of each first component by using a formula and in a simulation decision manner; or the plurality of second parameters are determined based on the indicators of the electrical parameters of the plurality of first components, the connection relationship between the plurality of first components, and the component feature of each first component by using a component feature library lookup table.

In this implementation, in a process of determining the plurality of second parameters, the connection relationship between the first components and the component feature of each first component are considered, so that accurate determining of the second parameters of each circuit sub-diagram can be ensured, thereby preventing the second parameters from being subsequently adjusted for a plurality of times due to excessively large deviations between the second parameters and actual parameters. Therefore, accuracy of determining the second parameters is improved, thereby improving efficiency of outputting the second circuit diagram, that is, improving circuit design efficiency. In addition, the second parameters are determined by using the formula and in the simulation decision manner, or by using the component feature library lookup table, thereby ensuring that the second parameters can be determined in different environments and different first circuit diagrams in actual application. On the basis of improvement in flexibility of determining the second parameters, reliability of determining the second parameters can be further improved, thereby improving circuit design flexibility and reliability.

In a possible implementation of the first aspect, the plurality of circuit sub-diagrams include a first circuit sub-diagram and a second circuit sub-diagram, the first circuit sub-diagram is before the second circuit sub-diagram in the simulation sequence, and the second circuit sub-diagram is a circuit sub-diagram to be last simulated, as indicated by the processing priorities. Based on this, before the first parameters included in the first components are replaced with the second parameters, to obtain the second components, the first circuit sub-diagram and the second circuit sub-diagram are first determined from the plurality of circuit sub-diagrams based on the processing priorities, and then the first circuit sub-diagram is simulated based on the plurality of second parameters, to obtain a plurality of circuit simulation results of the first circuit sub-diagram, where the plurality of circuit simulation results of the first circuit sub-diagram are electrical parameters obtained by simulating all first components in the first circuit sub-diagram.

Further, it is determined that the plurality of circuit simulation results of the first circuit sub-diagram meet the indicators of the electrical parameters of the plurality of first components, and the second circuit sub-diagram is simulated based on the plurality of second parameters, to obtain a plurality of circuit simulation results of the second circuit sub-diagram, where the plurality of circuit simulation results of the second circuit sub-diagram are electrical parameters obtained by simulating all first components in the second circuit sub-diagram. After it is determined that the plurality of circuit simulation results of the second circuit sub-diagram meet the indicators of the electrical parameters of the plurality of first components, the first parameters included in the first components are replaced with the second parameters, to obtain the second components, and the second circuit diagram constructed by the plurality of second components is output.

It should be understood that the first circuit sub-diagram and the second circuit sub-diagram may be adjacent circuit sub-diagrams, or may be non-adjacent circuit sub-diagrams. If the first circuit sub-diagram and the second circuit sub-diagram are non-adjacent circuit sub-diagrams, there is at least one circuit sub-diagram between the first circuit sub-diagram and the second circuit sub-diagram. Therefore, when the plurality of circuit simulation results of the first circuit sub-diagram meet indicators of electrical parameters of a plurality of first components in the first circuit sub-diagram, a next circuit sub-diagram of the first circuit sub-diagram needs to be simulated, and when simulation results of the next circuit sub-diagram meet indicators of electrical parameters of a plurality of first components in the next circuit sub-diagram, subsequent simulation and determining are further performed until a simulation procedure of the second circuit sub-diagram is reached. Simulation and determining processes of an intermediate circuit sub-diagram are not described herein, and this should not be construed as a limitation on this embodiment of this application.

In this implementation, the first circuit sub-diagram is before the second circuit sub-diagram in the simulation sequence. Therefore, when the plurality of circuit simulation results of the first circuit sub-diagram meet the indicators of the electrical parameters of the plurality of first components, it indicates that a plurality of determined second parameters of the first circuit sub-diagram can reach indicators of a circuit design performed on the first circuit sub-diagram. In this case, the second circuit sub-diagram can be further simulated. In addition, when the plurality of circuit simulation results of the second circuit sub-diagram meet the indicators of the electrical parameters of the plurality of first components, it indicates that a plurality of determined second parameters of the second circuit sub-diagram can reach indicators of a circuit design performed on the second circuit sub-diagram. The second circuit sub-diagram is a circuit sub-diagram to be last simulated, as indicated by the processing priorities. Therefore, the second parameters of the first circuit sub-diagram and the second parameters of the second circuit sub-diagram that are determined in this case are process parameters required by the first circuit diagram. Therefore, the second circuit diagram constructed by the plurality of second components is a required circuit, thereby ensuring circuit design reliability.

In a possible implementation of the first aspect, the process design kit PDK including the plurality of component models is first obtained. Then, the PDK is invoked to replace each first component in the first circuit sub-diagram, to obtain a third circuit sub-diagram. In this case, the third circuit sub-diagram includes a plurality of third components, the third components are components obtained by replacing the first components with component models, and process parameters of the third components are the second parameters. Finally, each third component in the third circuit sub-diagram is simulated, to obtain the plurality of circuit simulation results of the first circuit sub-diagram. Similarly, the process design kit PDK including the plurality of component models is first obtained. Then, the PDK is invoked to replace each first component in the second circuit sub-diagram, to obtain a fourth circuit sub-diagram. The fourth circuit sub-diagram includes a plurality of third components, the third components are components obtained by replacing the first components with component models, and process parameters of the third components are the second parameters. Finally, each third component in the fourth circuit sub-diagram is simulated, to obtain the plurality of circuit simulation results of the second circuit sub-diagram.

In this implementation, the PDK is invoked to replace the components, so that the first components that do not reflect actual process parameters are replaced with the third components that have actual process parameters. Simulation based on the third components can better implement circuit simulation in actual application and in a specific process. Therefore, the obtained plurality of circuit simulation results of the first circuit sub-diagram and the obtained plurality of circuit simulation results of the second circuit sub-diagram can be close to actual circuit running results, thereby ensuring accuracy of the circuit simulation results.

In a possible implementation of the first aspect, there are at least two types of simulation, and different types of simulation are used to obtain different circuit simulation results. It should be understood that the simulation types in this embodiment include but are not limited to AC simulation, TRAN simulation, DC simulation, and the like.

In this implementation, different types of simulation are performed, and obtained different types of simulation results can display features of the first circuit sub-diagram and features of the second circuit sub-diagram in different dimensions. In addition, when an indicator of a circuit parameter is not met, it is further convenient to determine a specific second parameter that needs to be adjusted, and efficiency of adjusting the second parameter is improved, thereby improving circuit design accuracy and efficiency.

In a possible implementation of the first aspect, when it is determined that the plurality of circuit simulation results of the first circuit sub-diagram do not meet the indicators of the electrical parameters of the plurality of first components in the first circuit sub-diagram, second parameters of the first circuit sub-diagram are to be re-determined. It should be understood that second parameters of another circuit sub-diagram are not re-determined in this case. Similarly, when it is determined that the plurality of circuit simulation results of the second circuit sub-diagram do not meet the indicators of the electrical parameters of the plurality of first components in the second circuit sub-diagram, second parameters of the second circuit sub-diagram are to be re-determined. It should be understood that second parameters of another circuit sub-diagram are not re-determined in this case.

In this implementation, the plurality of circuit simulation results of the first circuit sub-diagram do not meet the indicators of the electrical parameters of the plurality of first components in the first circuit sub-diagram, that is, some of the determined plurality of second parameters of the first circuit sub-diagram may not reach indicators of a circuit design performed on the first circuit sub-diagram. Therefore, the second parameters of the first circuit sub-diagram need to be readjusted, to ensure that the second parameters of the first circuit sub-diagram are accurate. Similarly, the second parameters of the second circuit sub-diagram can also be ensured to be accurate, thereby ensuring that the output second circuit diagram is a required circuit.

In a possible implementation of the first aspect, before the first circuit diagram is obtained, a circuit input interface can be further provided, to receive a circuit input operation through the circuit input interface, and obtain the first circuit diagram based on the circuit input operation. In addition, before the indicator of the electrical parameter of the first circuit diagram is obtained, a procedure editing interface can be further provided, to receive an indicator input operation through the procedure editing interface, and obtain the indicator of the electrical parameter of the first circuit diagram based on the indicator input operation. Further, a result display interface can be further provided, to display the second circuit diagram and the plurality of circuit simulation results of the first circuit diagram through the result display interface.

In this implementation, a user can perform a circuit input operation on the circuit input interface, to complete an input of the first circuit diagram; and perform an indicator input operation on the procedure editing interface, to complete an input of the indicator of the electrical parameter of the first circuit diagram. Therefore, this solution is implemented by using the interfaces, and by using automatic design verification software that is similar to low code and that is established based on a parameterized background software function library corresponding to a processing module and a verification module that are internally integrated, thereby improving feasibility and flexibility of this solution. In addition, the second circuit diagram and the plurality of circuit simulation results of the first circuit diagram can be further displayed through the result display interface, so that the user can more intuitively view the obtained second circuit diagram and the corresponding simulation results, thereby improving applicability of a circuit device.

According to a second aspect, this application provides a circuit design device, including a processor. The processor is coupled to a memory, and may be configured to execute instructions in the memory, to implement the method in any one of the possible implementations of the first aspect. Optionally, the terminal device further includes a memory. Optionally, the terminal device further includes a communication interface. The processor is coupled to the communication interface. The communication interface is configured to input and/or output information, and the information includes at least one of instructions and data. It should be understood that the communication interface may be implemented by using same hardware logic, or may be implemented by using different hardware logic. For example, one hardware interface may have only an input function or an output function, or one hardware interface may have both an input function and an output function.

In another implementation, the terminal device is a chip or a chip system configured in the circuit design device. When the terminal device is a chip or a chip system configured in the circuit design device, the communication interface may be an input/output interface, an interface circuit, an output circuit, an input circuit, a pin, a related circuit, or the like. The processor may alternatively be embodied as a processing circuit or a logic circuit.

In a specific implementation process, the memory may be a non-transitory (non-transitory) memory, such as a read-only memory (read only memory, ROM). The memory and the processor may be integrated into one chip, or may be separately disposed in different chips. A type of the memory and a manner in which the memory and the processor are disposed are not limited in this embodiment of this application.

It should be understood that, for a related information exchange process, for example, sending a message may be a process of outputting a message from the processor, and receiving a message may be a process of inputting a received message to the processor. Specifically, information output by the processor may be output to a transmitter, and input information received by the processor may be from a receiver. The transmitter and the receiver may be collectively referred to as a transceiver.

According to a third aspect, this application provides a processor, including an input circuit, an output circuit, and a processing circuit. The processing circuit is configured to receive a signal by using the input circuit, and transmit a signal by using the output circuit, so that the processor performs the method in any one of the possible implementations of the first aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in this embodiment of this application.

According to a fourth aspect, this application provides a computer program product. The computer program product includes a computer program (which may also be referred to as code or instructions). When the computer program is run, a computer is enabled to perform the method in any one of the possible implementations of the first aspect.

According to a fifth aspect, this application provides a computer-readable storage medium. The computer-readable storage medium stores a computer program (which may also be referred to as code or instructions). When the computer program is run on a computer, the computer is enabled to perform the method in any one of the possible implementations of the first aspect.

According to a sixth aspect, this application provides a nonvolatile computer-readable storage medium. The nonvolatile computer-readable storage medium stores a computer program (which may also be referred to as code or instructions). When the computer program is run on a computer, the computer is enabled to perform the method in any one of the possible implementations of the first aspect.

According to a seventh aspect, this application provides a chip system. The chip system includes a processor and an interface. The interface is configured to obtain a program or instructions, and the processor is configured to invoke the program or the instructions to implement a function in the first aspect.

In a possible design, the chip system further includes a memory. The memory is configured to store program instructions and data that are necessary for a circuit design device. The chip system may include a chip, or may include a chip and another component.

It should be noted that beneficial effects brought by the implementations of the second aspect to the seventh aspect of this application may be understood with reference to the implementations of the first aspect. Therefore, details are not repeated.

**BRIEF DESCRIPTION OF DRAWINGS**

FIG. 1 is a schematic diagram of a procedure structure according to an embodiment of this application;
FIG. 2 is a schematic diagram of an embodiment of a circuit design according to an embodiment of this application;
FIG. 3 is a schematic circuit diagram of a first circuit diagram according to an embodiment of this application;
FIG. 4 is a schematic interface diagram of a circuit input interface according to an embodiment of this application;
FIG. 5 is a schematic interface diagram of a procedure editing interface according to an embodiment of this application;

FIG. 6 is a schematic diagram of an embodiment of a functional component in a functional component library according to an embodiment of this application;
FIG. 7 is a schematic flowchart of decomposing an indicator of an electrical parameter of a first circuit diagram to obtain indicators of electrical parameters of a plurality of first components according to an embodiment of this application;
FIG. 8 is a schematic flowchart of determining a second parameter according to an embodiment of this application;
FIG. 9 is a schematic flowchart of obtaining a plurality of circuit simulation results of a first circuit diagram according to an embodiment of this application;
FIG. 10 is a schematic flowchart of a circuit design according to an embodiment of this application;
FIG. 11A and FIG. 11B are a schematic diagram of another embodiment of a circuit design according to an embodiment of this application;
FIG. 12 is a schematic diagram of an embodiment of dividing a first circuit diagram to obtain a plurality of circuit sub-diagrams according to an embodiment of this application;
FIG. 13 is a schematic diagram of an embodiment of a design flowchart of a first circuit diagram according to an embodiment of this application;
FIG. 14 is a schematic diagram of an embodiment of a design flowchartdesign flowchart of a circuit sub-diagram according to an embodiment of this application; and
FIG. 15 is a schematic diagram of another embodiment of a design flowchartdesign flowchart of a circuit sub-diagram according to an embodiment of this application.

**DESCRIPTION OF EMBODIMENTS**

The following clearly and completely describes technical solutions in embodiments of the present invention with reference to accompanying drawings in embodiments of the present invention. It is clear that the described embodiments are merely a part rather than all of embodiments of the present invention. All other embodiments obtained by a person skilled in the art based on embodiments of the present invention shall fall within the protection scope of the present invention.

In the specification, claims, and accompanying drawings of the present invention, the terms "first", "second", "third", "fourth", and so on (if existent) are intended to distinguish between similar objects but do not necessarily indicate a specific order or sequence. It should be understood that the data termed in such a way is interchangeable in proper circumstances so that embodiments described herein can be implemented in orders other than the order illustrated or described herein. In addition, the terms "include" and "have" and any other variants are intended to cover the nonexclusive inclusion.

For example, a process, method, system, product, or device that includes a list of steps or units is not necessarily limited to those expressly listed steps or units, but may include other steps or units not expressly listed or inherent to such a process, method, product, or device.

With development of semiconductor technologies, coupling between model parameters becomes increasingly greater. Currently, a computer can be used to adjust a parameter of a to-be-processed component by using a mathematical optimization algorithm, to find an optimal design of a circuit based on a change of a simulation result. Generally, a user specifies a design space range (for example, a circuit structure, a type of a to-be-processed component, and a parameter selection range), a design specification indicator, and a weight. Computer software converts a design problem into a mathematical optimization problem, and solves the problem by using a numerical algorithm. However, when there are excessive possible circuit design targets and constraints, it is difficult for an optimizer to provide a complete compromise among a relatively large quantity of targets and constraints in an appropriate time. Therefore, it is relatively difficult to determine a proper weight, and incorrect weight allocation causes an improper design. Therefore, a larger circuit scale leads to a more serious problem of the improper design, thereby reducing circuit design efficiency.

To resolve the foregoing problem, embodiments of this application provide a circuit design method and a related device, so that a process of adjusting a process parameter of a circuit, running simulation to view a result, and then performing readjustment can be reduced, that is, a plurality of iteration operations can be reduced, thereby improving circuit design efficiency.

For ease of understanding, professional technical terms in embodiments of this application are first explained.

1. Standard component library

The standard component library is a database that includes a plurality of standard components.

2. Standard component

A standard component is a component whose component parameter is used in a process and has a normalized name. That is, a standard parameter is a parameter that is used in a plurality of processes and that has a normalized name. For example, for MOS components, a MOS component that is a standard component has only a MOS component type and several parameters related to a MOS component size. The MOS component type includes an N-channel MOS component and a P-channel MOS component. The several parameters related to the MOS component size, such as a MOS component length (length), have different names in different processes, for example, L, 1, length, and channel length.

When invoking the standard component, a designer only needs to determine a length of the MOS component, and does not need to know specific names in different processes.

3. Functional component library

The functional component library is a functional module that provides a parameterized defined functional module in a design flowchart for a user to use, configure, and perform symbolized presentation. In embodiments, a functional module is defined as a functional component. Functional components included in the functional component library can be subdivided into a system design functional component, a circuit design functional component, a circuit simulation functional component, a basic procedure functional component, and an observation and positioning functional component based on function types.

Specifically, the system design functional component is configured to optimize an indicator of an electrical parameter of a circuit diagram, for example, optimize bandwidth and a phase margin, or optimize a gain and bandwidth. The circuit design functional component is configured to perform functions such as table lookup, for example, transconductance table lookup or intensity of current drain (intensity of current drain, id) table lookup. The circuit simulation functional component is configured to perform simulation on a circuit diagram to obtain a simulation result, for example, perform various types of simulation such as alternating current (alternating current, AC) simulation, transient (transient, TRAN) simulation, and direct current (direct current, DC) simulation. The basic procedure functional component is configured to perform a determining function, a loop function, a branching function, a nesting function, and the like in an actual executable application. The observation and positioning functional component is configured to perform a breakpoint function, a printing function, or the like. It should be understood that the foregoing examples are merely used to describe some functions of each functional component. In actual application, there is another functional component, and each functional component has more different functions. Therefore, the foregoing examples should not be construed as limitations on embodiments of this application.

4. Design flowchart

The design flowchart is a flowchart that is visually displayed on an interface. EDA software needs to provide function support required for the designer to build a visual flowchart, including a component dragging and placing function, a procedure connection function, and the like. The EDA software can convert a design flowchart entered by the user into an actual executable application, and the actual executable application processes, based on an operation defined in the flowchart, a circuit diagram entered by the designer, to generate a finally obtained circuit diagram.

5. Feature solving function

Feature solving functions are some functional functions used when the designer designs parameters of components, and each component corresponds to one feature solving function. Based on this, the feature solving function is a function that can calculate a parameter of a component (which is determined through calculation based on a parameter of the component entered by the designer). Therefore, based on the feature solving function, a required output can be implemented by using a parameterization configuration of the function.

6. Operable built-in function

The operable built-in function is a function that is of a software program and that is obtained by encapsulating the feature solving function.

7. Process design kit (process design kit, PDK)

The PDK is a design kit that includes a plurality of component models and that is provided by a semiconductor manufacturer. Different semiconductor manufacturers have different PDKs, that is, parameters of component models included in different PDKs are different. Therefore, for a same component, parameters that are used for simulation and that are determined by using different PDKs are different.

8. Circuit sub-diagram

A sub-diagram (sub-diagram) is a graph in which a node set and an edge set are respectively subsets of a node set and an edge set that are of a graph. Based on this, a circuit sub-diagram described in embodiments is a graph that includes at least one component and that is obtained by dividing a plurality of components in a circuit diagram, and a plurality of circuit sub-diagrams obtained through division can form a complete circuit diagram. It should be understood that a component attribute of a component in the circuit sub-diagram obtained by dividing the circuit diagram does not change, and a topological relationship formed by connecting ports of each component by using a wire does not change.

9. Component attribute

The component attribute is an attribute of a component, and the component attribute can reflect a specific value of an electrical parameter of the component. For example, based on application of this solution to software (that is, EDA software), a component attribute of a resistor component in the EDA software is specifically displayed as 10 ohms (Ω). Similarly, a component attribute of a capacitor component in the EDA software is specifically displayed as 10 farads (farad, F), a component attribute of an inductor component in the EDA software is specifically displayed as 10 henries (H), and so on.

10. Indicator of an electrical parameter

In the field of circuit designs, an indicator of an electrical parameter of a circuit diagram is an indicator that should be reached by a circuit formed based on the circuit diagram and that is determined by the designer based on a specific requirement. For example, electrical parameters of the circuit diagram are an operational amplifier direct current gain (Av) and a unit gain bandwidth product (gain bandwidth product, GBW) that are of the circuit formed based on the circuit diagram, where the operational amplifier direct current gain should be greater than 100 dB, and the unit gain bandwidth product should be greater than 500 megacycles (Mhz). An indicator of an electrical parameter of a component is an indicator that should be reached by the component. For example, a capacitance value (capacitance) of a capacitor of a load capacitor component should be less than 10F.

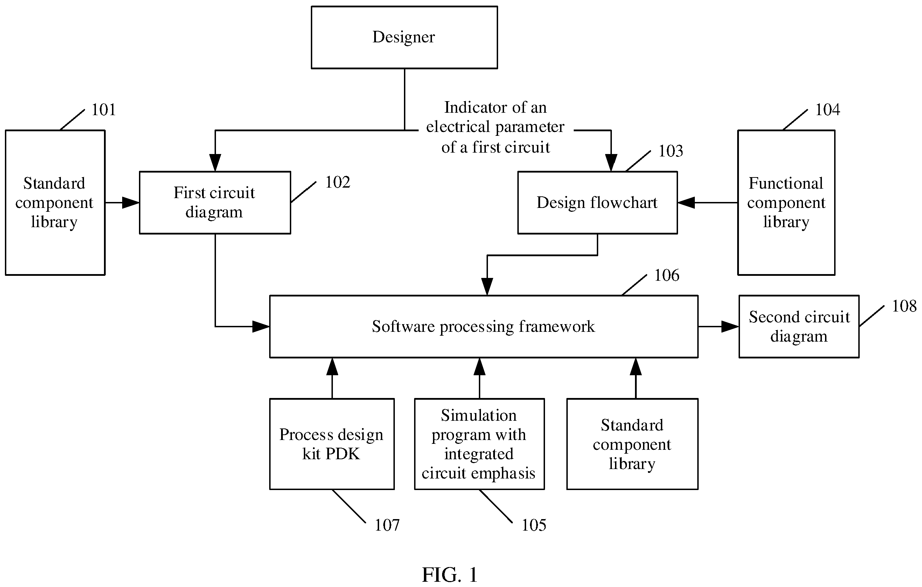

Based on the foregoing description, the following describes a specific procedure structure in an embodiment of this application. FIG. 1 is a schematic diagram of a procedure structure according to an embodiment of this application. As shown in FIG. 1, a software programming concept is used, and a circuit design idea of a designer, a calculation process, and a simulation decision are presented by drawing a software flowchart. The designer obtains a first component from a standard component library 101, and constructs a first circuit diagram 102 based on the first component. Specifically, the first component is the standard component described above, a process parameter of the first component is defined as a first parameter, and the first parameter is the standard parameter described above.

Based on this, the designer first enters an indicator of an electrical parameter of the first circuit diagram 102, then invokes a system design functional component from a functional component library 104, and invokes a circuit design functional component from the functional component library 104. In addition, in a design flowchart 103, the system design functional component is used to decompose the indicator of the electrical parameter of the first circuit diagram 102, to reflect an indicator of an electrical parameter of each first component in the first circuit diagram 102. Further, the circuit design functional component is used to determine a second parameter, and the first parameter included in the first component is replaced with the second parameter, to obtain a second component. In this case, the second parameter is a parameter of a component model included in a PDK.

It can be learned that the system design functional component is used to obtain the first circuit diagram constructed based on a plurality of first components and indicators of electrical parameters of the plurality of first components, so that the circuit diagram can be decoupled from the indicator of the electrical parameter of the circuit diagram. In addition, the circuit design functional component is used to determine the second parameter of the first circuit diagram 102. The first components include parameters that are used in a plurality of processes and that have normalized names, that is, a parameter included in a specifically used process design kit PDK is not considered. Electrical parameters of the second components are parameters included in the PDK. Therefore, the first circuit diagram 102 can be decoupled from the PDK.

Specifically, in different functional components in the design flowchart 103, to improve design efficiency and reduce a requirement on a software programming capability of the designer, a feature solving function corresponding to each first component is encapsulated to obtain a corresponding operable built-in function, and a graphical interface is provided to implement a low-code design of a circuit by dragging a component. In addition, different functional components in the design flowchart 103 integrate a case library, so that design iteration can be completed by directly generating a netlistlist of a SPICE 105 and performing simulation verification in a design procedure.

Based on this, after the low-code design is completed in the design flowchart 103, with reference to a connection relationship between the plurality of first components in the first circuit diagram 102 and a component feature included in each first component, a background software processing framework 106 is started for processing. Specifically, after code corresponding to different functional components in the design flowchart 103 is combined into a program based on a procedure, non-simulation code is executed, and a typical parameter is output to the circuit. Then, each first component in the first circuit diagram is replaced with a component model in the process design kit PDK. In this case, a process parameter of each component model is a second parameter. Therefore, the second parameter can be determined based on an actual PDK, and a testbench is invoked to load the circuit to execute simulation code, to perform simulation based on the second parameter. Then, a plurality of circuit simulation results of the first circuit diagram are obtained.

Further, it can be learned from the foregoing description that the functional component library includes a plurality of functional components, and a basic procedure functional component can perform a determining function in an actual executable application. Therefore, when completing the design flowchart, the designer needs to place the basic procedure functional component based on dragging, and use the basic procedure functional component to execute the determining function in the actual executable application. Therefore, the plurality of circuit simulation results of the first circuit diagram need to be used as an input of the basic procedure functional component, to finally complete an entire simulation design procedure. When the plurality of circuit simulation results of the first circuit diagram meet the indicators of the electrical parameters of the plurality of first components, a second circuit diagram 108 is output. It should be understood that, when the second circuit diagram 108 is output, the plurality of circuit simulation results of the first circuit diagram can be further obtained and displayed on a corresponding interface. This is not specifically limited herein.

It can be learned from FIG. 1 that, compared with a conventional circuit design procedure, the circuit design procedure structure provided in this embodiment of this application can release the designer from a design iteration phase. A designed circuit diagram that does not include a process parameter is recorded by using the first circuit diagram 102, and a circuit design procedure method is recorded by using the design flowchart 103. When the designer adjusts the indicator of the electrical parameter of the first circuit diagram 102, the entire procedure structure can be independent of the designer, the indicator of the electrical parameter of the first circuit diagram 102 can be decomposed again by using the design flowchart 103, the indicator of the electrical parameter of each first component in the first circuit diagram 102 is obtained again, and process parameters whose simulation results can meet the indicators of the electrical parameters of the plurality of first components are obtained based on the described procedure, thereby obtaining the second circuit diagram 108 that meets the indicator of the electrical parameter of the first circuit diagram 102.

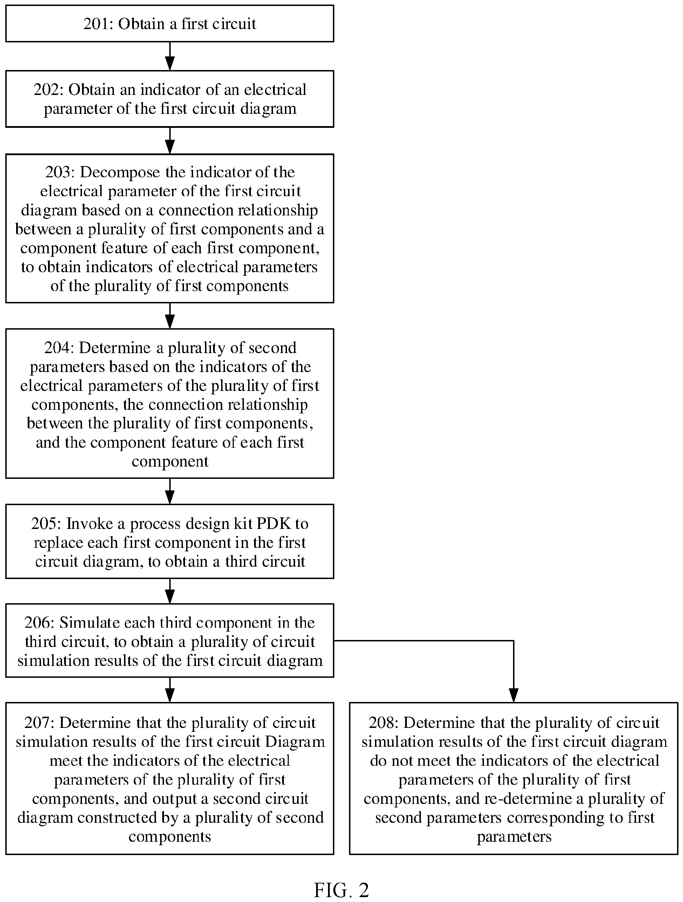

The foregoing mainly describes the procedure structure in this embodiment of this application. The following describes, in detail from a perspective of a method, a solution provided in an embodiment of this application. FIG. 2 is a schematic diagram of an embodiment of a circuit design according to an embodiment of this application. As shown in FIG. 2, an embodiment of a circuit design method is described below.

201: Obtain a first circuit diagram.

In this embodiment, the first circuit diagram is obtained, where the first circuit diagram is constructed based on a plurality of first components, and the first components include first parameters. Specifically, a designer obtains the first components from a standard component library and constructs the first circuit diagram based on the first components, thereby completing an input of the first circuit diagram. Specifically, the first component is the standard component described above, a process parameter of the first component is defined as a first parameter, and the first parameter is the standard parameter described above.

Specifically, the first circuit diagram further includes a connection relationship between the plurality of first components, and each first component includes a component feature. The connection relationship between the plurality of first components is a topological relationship formed by connecting ports of the plurality of first components by using a wire, and the component feature included in each first component is a component attribute of the first component.

In actual application, when this embodiment of this application is executed by using a software program, the plurality of first components in the first circuit diagram can be identified as independent objects by using a tool, and a feature solving function corresponding to each first component can be obtained. Based on this, the feature solving function corresponding to each first component is encapsulated to obtain a corresponding operable built-in function, and then the feature solving functions corresponding to the plurality of first components are output to a design flowchart as usable component modules, to complete a software procedure of a software processing framework. In addition, because the first circuit diagram further includes the connection relationship between the plurality of first components, and each first component includes the component feature, in this case, the connection relationship between the plurality of first components and the component feature included in each first component are converted into a corresponding SPICE netlist, to generate a verification case that can be invoked for simulation in the design flowchart.

Optionally, for ease of distinguishing between the plurality of first components, each first component may be further numbered, and each first component corresponds to an independent and non-repeated number identifier. For example, the first circuit diagram includes a first component A, a first component B, and a first component C. In this case, a number identifier of the first component A is determined as "1", a number identifier of the first component B is determined as "2", and a number identifier of the first component C is determined as "3". Therefore, when the designer and a subsequent program product perform the process parameter adjustment and simulation, a corresponding first component can be directly determined by using a number identifier, thereby further improving circuit design efficiency.

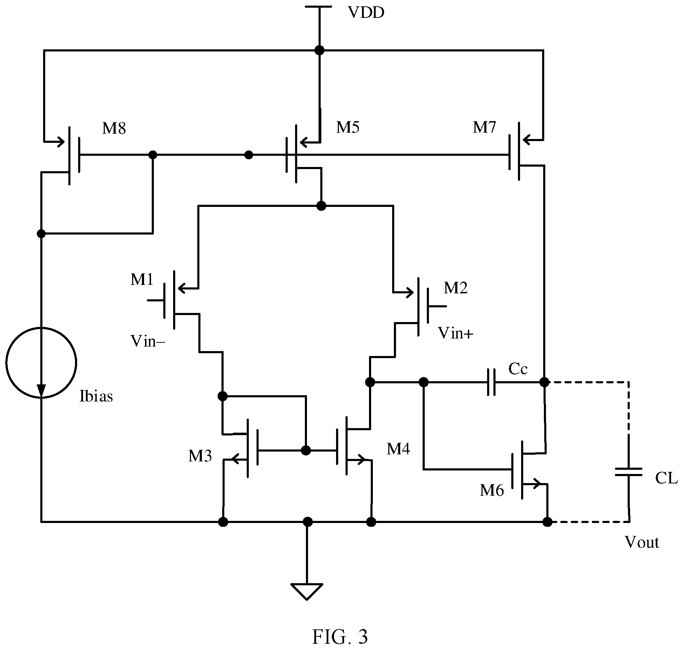

For ease of understanding, FIG. 3 is a schematic circuit diagram of a first circuit diagram according to an embodiment of this application. As shown in FIG. 3, the designer enters a built first circuit diagram. The first circuit diagram is a typical two-stage operational amplifier circuit. The first circuit diagram specifically includes MOS components, a coupling capacitor, a bias voltage current source, a load capacitor component, and a plurality of external module ports. The MOS components in FIG. 3 respectively include M1, and M2 to M8. In FIG. 3, the coupling capacitor is Cc, the bias voltage current source is Ibias, the load capacitor component is CL, and the plurality of external module ports are respectively Vin-, Vin+, Vout, and VDD.

Specifically, the MOS component M5, the MOS component M7, and the MOS component M8 are connected to the external module port VDD, and the bias voltage current source Ibias, the MOS component M3, the MOS component M4, the MOS component M6, and the load capacitor component CL are grounded. The MOS component M8 is connected to the bias voltage current source Ibias, the MOS component M5 is connected to the MOS component M1 and the MOS component M2, the MOS component M1 is connected to the external port Vin-, and the MOS component M2 is connected to the external port Vin+. The MOS component M3 is connected to the MOS component M1, the MOS component M4 is connected to the MOS component M2, the MOS component M6 is connected to the coupling capacitor Cc, and both the MOS component M6 and the coupling capacitor Cc are connected to the load capacitor component CL.

Specifically, the MOS components include standard parameters of a width (width) and a length (length), the coupling capacitor Cc includes a standard parameter of a capacitance value (capacitance), the bias voltage current source includes a standard parameter of a voltage value (voltage), the load capacitor component includes a standard parameter of a capacitance value (capacitance), and the plurality of external module ports Vin-, Vin+, Vout, and VDD each include a standard parameter of a voltage value (voltage). It should be understood that the foregoing example is merely used to understand this solution, and a specific first circuit diagram needs to be flexibly determined based on a design requirement.

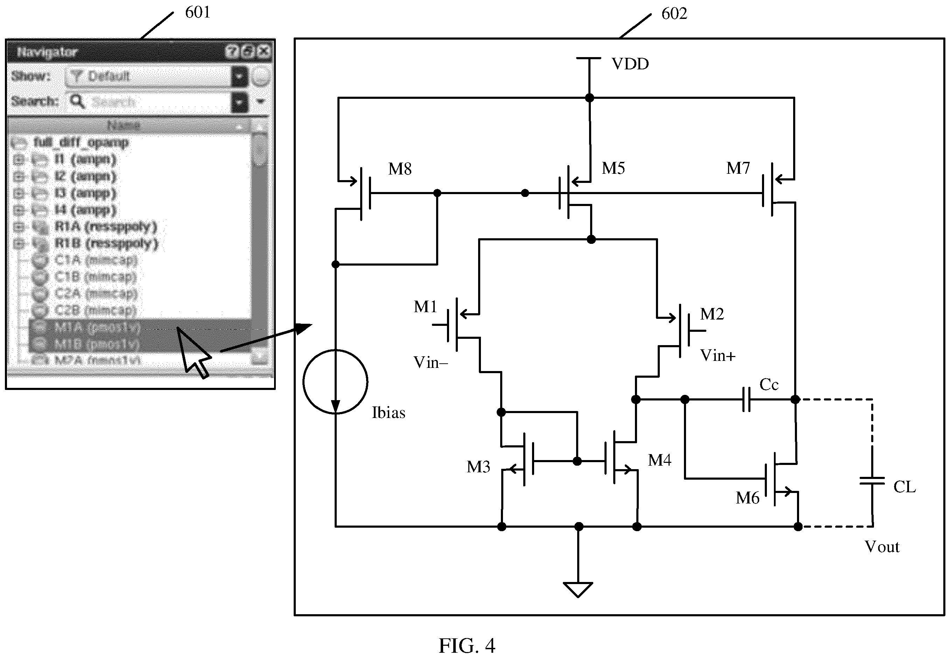

Optionally, in actual application, a circuit input interface can be further provided, to receive a circuit input operation through the circuit input interface, and perform, based on the circuit input operation, the step of obtaining the first circuit diagram. In this embodiment, specifically, the circuit input operation is implemented by the designer by dragging the first components on the circuit input interface. That is, the circuit input interface is mainly used by the designer to build the first circuit diagram that is based on standard components (that is, the first components). For ease of understanding, FIG. 4 is a schematic interface diagram of a circuit input interface according to an embodiment of this application. As shown in FIG. 4, on the circuit input interface, the designer selects, based on a specific design requirement, a first component from an interface 601 including first components, and drags the selected first component, to complete a circuit input operation, so that a first circuit diagram 602 can be obtained. It should be understood that the example in FIG. 4 is merely used to illustrate how to perform a circuit input operation on the first circuit diagram on the circuit input interface. Therefore, neither a specific interface layout nor an interface format of the circuit input interface should be construed as a limitation on this solution.

202: Obtain an indicator of an electrical parameter of the first circuit diagram.

In this embodiment, the indicator of the electrical parameter of the first circuit diagram is obtained. In this case, the indicator of the electrical parameter of the first circuit diagram is an indicator of an electrical parameter of the first circuit diagram that is input in step 201.

Specifically, the designer can enter, with reference to an actual circuit design idea of the designer and a requirement, an indicator of an electrical parameter that is expected to be achieved by the first circuit diagram. Specifically, the electrical parameter may include but is not limited to an operational amplifier direct current gain (Av), a unit gain bandwidth product (gain bandwidth product, GBW), load capacitance (load capacitance, CL), a phase margin (phase margin, PM), a slew rate (slew rate, SR), noise (noise voltage, Vn), non-linear distortion (total harmonic distortion, THD), and the like. A specific electrical parameter needs to be determined based on an actual requirement of a circuit design.

Optionally, in actual application, a procedure editing interface can be further provided, to receive an indicator input operation through the procedure editing interface, and perform, based on the indicator input operation, the step of obtaining the indicator of the electrical parameter of the first circuit diagram. In this embodiment, it can be learned from the foregoing description that functional components included in a functional component library can be subdivided into a system design functional component, a circuit design functional component, a circuit simulation functional component, a basic procedure functional component, an observation and positioning functional component, and the like based on function types. Based on this, the designer operates the functional components included in the functional component library by dragging on the procedure editing interface, that is, uses the system design functional component, the circuit design functional component, the circuit simulation functional component, the basic procedure functional component, and the observation and positioning functional component to build the design flowchart. In the design flowchart, specification inputs are defined by using different functional components, parameters are set for different functional components, a correspondence between each functional component and the first circuit diagram is defined, and the indicator of the electrical parameter of the first circuit diagram is input. Based on this, in a process of building the design flowchart, a dragging manner is supported, and an internally integrated function and verification case library are used, to implement specific instantiation of each functional component in the design flowchart of circuit design software, thereby implementing fast development of low code.

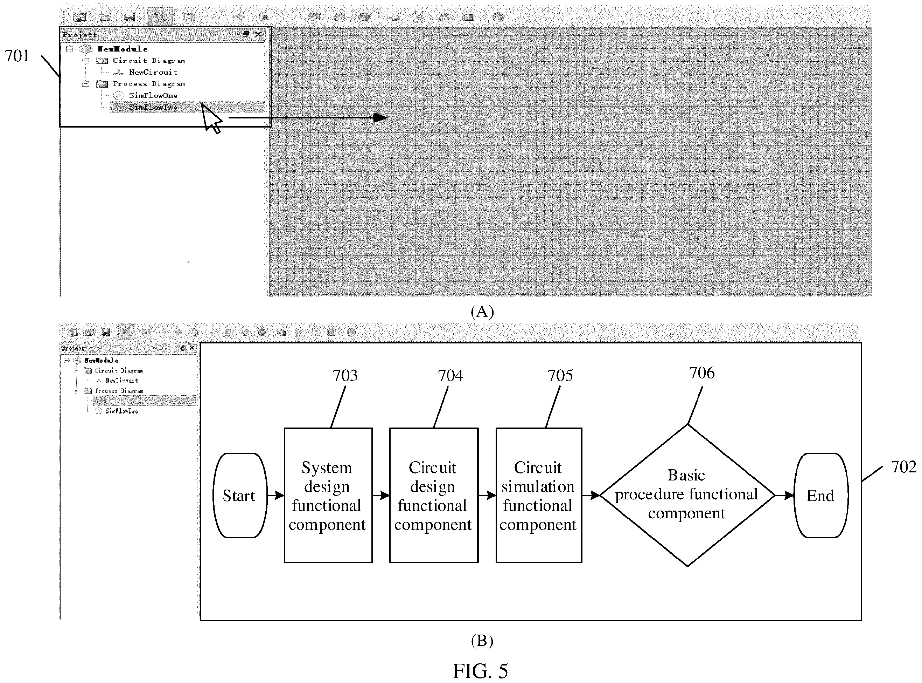

For ease of understanding, FIG. 5 is a schematic interface diagram of a procedure editing interface according to an embodiment of this application. As shown in FIG. 5, a functional component library 701 shown in (A) in FIG. 5 includes a plurality of different functional components. The designer selects a specific functional component from the functional component library 701 based on a specific design requirement, and drags the selected functional component, to build a design flowchart, thereby obtaining a design flowchart 702 shown in (B) in FIG. 5. In addition, after the design flowchart 702 is built, an indicator of an electrical parameter of the first circuit diagram is input into a system design functional component 703, to complete an indicator input operation on the indicator of the electrical parameter of the first circuit diagram, so that the indicator of the electrical parameter of the first circuit diagram can be obtained.

Further, the system design functional component 703 decomposes the indicator of the electrical parameter of the first circuit diagram to obtain indicators of electrical parameters of the plurality of first components, and inputs the indicators of the electrical parameters of the plurality of first components into a circuit design functional component 704. The circuit design functional component 704 determines a second parameter, invokes a PDK based on the second parameter, replaces the first components in the first circuit diagram with component models in the PDK, and inputs replaced first components into a circuit simulation functional component 705. The circuit simulation functional component 705 performs circuit simulation based on the replaced first components to obtain circuit simulation results of the plurality of first components, and inputs the circuit simulation results of the first components into a basic procedure functional component 706. The basic procedure functional component 706 determines whether the circuit simulation results of the plurality of first components meet the indicators of the electrical parameters of the plurality of first components, and outputs a result when the indicators of the electrical parameters of the plurality of first components are met, to end the procedure. It should be understood that the example in FIG. 5 is merely used to illustrate how to perform an indicator input operation on the indicator of the electrical parameter of the first circuit diagram on the procedure editing interface. Therefore, neither a specific interface layout nor an interface format of the procedure editing interface should be construed as a limitation on this solution.

203: Decompose the indicator of the electrical parameter of the first circuit diagram based on the connection relationship between the plurality of first components and the component feature of each first component, to obtain the indicators of the electrical parameters of the plurality of first components.

In this embodiment, because the first circuit diagram further includes the connection relationship between the plurality of first components, and each first component includes the component feature, the indicator of the electrical parameter of the first circuit diagram obtained in step 202 can be decomposed based on the connection relationship between the plurality of first components and the component feature of each first component, to obtain the indicators of the electrical parameters of the plurality of first components.

For example, description is provided by using an example in which the first circuit diagram is the schematic circuit diagram in FIG. 3, and the obtained indicator of the electrical parameter of the first circuit diagram includes an indicator of an operational amplifier direct current gain of the first circuit diagram, an indicator of a unit gain bandwidth product of the first circuit diagram, an indicator of load capacitance of the first circuit diagram, and an indicator of a coupling capacitorcomponent in the first circuit diagram. The first circuit diagram specifically includes the MOS components M1 to M8, the coupling capacitor Cc, the bias voltage current source Ibias, and the load capacitor component CL. After the indicator of the electrical parameter of the first circuit diagram is decomposed, an indicator of an operational amplifier direct current gain of the MOS component M1 and an indicator of a unit gain bandwidth product of the MOS component M1 may be obtained, and an indicator of an operational amplifier direct current gain of the MOS component M2 and an indicator of a unit gain bandwidth product of the MOS component M2 may be further obtained. Similarly, indicators of operational amplifier direct current gains of the MOS component M3 to the MOS component M8 may be obtained, and indicators of unit gain bandwidth products of the MOS component M3 to the MOS component M8 may be obtained. Further, an indicator of load capacitance of the load capacitor component CL and an indicator of a coupling capacitor of the coupling capacitor Cc may be further obtained. The foregoing example is merely used to understand this solution, and should not be construed as a limitation on this solution.

Specifically, after entering the indicator of the electrical parameter of the first circuit diagram, the designer can invoke the system design functional component and the circuit design functional component from the functional component library. Specifically, the system design functional component is instantiated, and the system design functional component is used to decompose the indicator of the electrical parameter of the first circuit diagram to obtain the indicators of the electrical parameters of the plurality of first components, to reflect an indicator of an electrical parameter of each first component in the first circuit diagram. In this way, an operation of reflecting process parameters of the first components in the first circuit diagram in different functional components can be performed, and then the process parameters of the first components are transferred, by using a connection line, to the system design functional component that is invoked from the component library, so that the system design functional component becomes an actual instantiated functional module. Therefore, the first circuit diagram can be decoupled from an actual process parameter.

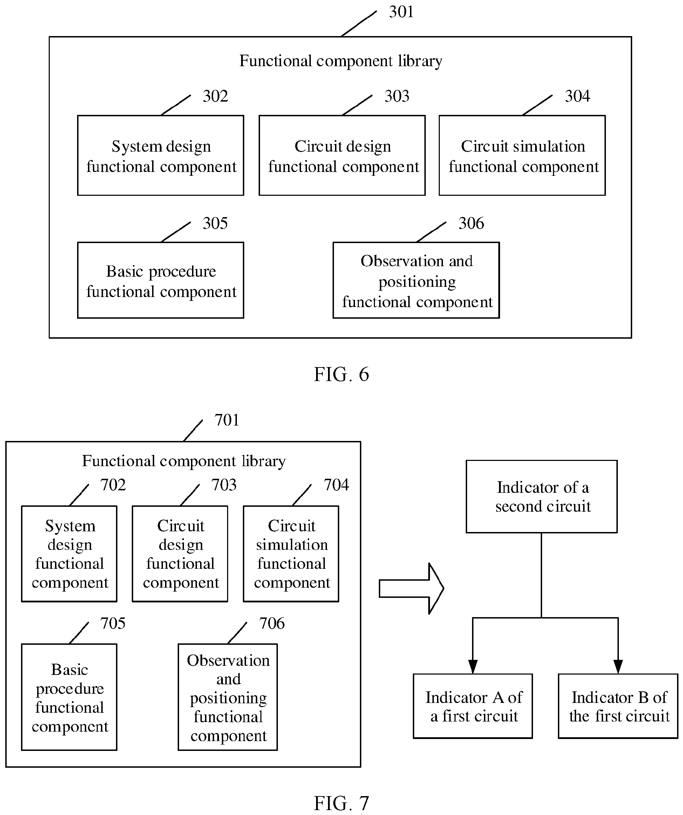

For ease of understanding, a functional component that is in the functional component library and that is related to a design procedure is first described. FIG. 6 is a schematic diagram of an embodiment of a functional component in a functional component library according to an embodiment of this application. As shown in FIG. 6, a functional component library 301 includes a system design functional component 302, a circuit design functional component 303, a circuit simulation functional component 304, a basic procedure functional component 305, and an observation and positioning functional component 306. It should be understood that, in actual application, there is another functional component. Therefore, the functional component library should not be construed as a limitation on this embodiment of this application.

Description is provided based on the first circuit diagram shown in FIG. 3 and the example of the functional component library shown in FIG. 6. FIG. 7 is a schematic flowchart of decomposing an indicator of an electrical parameter of a first circuit diagram to obtain indicators of electrical parameters of a plurality of first components according to an embodiment of this application. As shown in FIG. 7, there are some fixed formulas and parameter settings inside a system design functional component 702 in a functional component library 701. The fixed formulas and the parameter settings are from a textbook or are output by the designer through experience summarization, or may be customized by the designer. For example, a formula for a direct current gain of a single-stage operational amplifier is as follows:

$$A_V = G_M * R_0 \quad (1)$$

Herein, $A_V$ is a direct current gain, $G_M$ is conductance, and $R_0$ is resistance.

In addition, a formula for a unit gain bandwidth product of the single-stage operational amplifier is as follows:

$$GBW = \frac{gm}{2 * p_i * C_C} \quad (2)$$

Herein, $GBW$ is a unit gain bandwidth product, gm is transconductance, $p_i$ is electric power, and $C_c$ is capacitance of a coupling capacitor.

It should be understood that the foregoing formulas are merely used to describe the fixed formulas, and a specific formula inside the system design functional component 702 is not limited herein.

Based on this, the indicator of the electrical parameter of the first circuit diagram is input into the system design functional component, so that the system design functional component can calculate and output the indicators of the electrical parameters of the plurality of first components by using the connection relationship between the plurality of first components and the component feature of each first component and based on the internal fixed formulas and the parameter settings.

For example, if the indicator of the electrical parameter of the first circuit diagram includes an indicator of an operational amplifier direct current gain of the first circuit diagram, an indicator of a unit gain bandwidth product of the first circuit diagram, an indicator of load capacitance of the first circuit diagram, and an indicator of a coupling capacitorcomponent in the first circuit diagram, based on the first circuit diagram shown in FIG. 3, the system design functional component 702 can decompose the indicator of the operational amplifier direct current gain of the first circuit diagram into indicators of operational amplifier direct current gains of the MOS component M1 to the MOS component M8 based on the formula (1) by using the connection relationship between the plurality of first components and the component feature of each first component, and decompose the indicator of the unit gain bandwidth product of the first circuit diagram into indicators of unit gain bandwidth products of the MOS component M1 to the MOS component M8 based on the formula (2) by using the connection relationship between the plurality of first components and the component feature of each first component.

Similarly, an indicator of load capacitance of the load capacitor component CL and an indicator of a coupling capacitor of the coupling capacitor Cc can be further obtained by using other formulas that are not shown. It should be understood that the example in FIG. 7 is merely used to describe how to obtain the indicators of the electrical parameters of the plurality of first components. In actual application, indicator decomposition needs to be performed based on an indicator of an electrical parameter of a specific first circuit diagram and the first circuit diagram. Therefore, the example should not be construed as a limitation on this embodiment of this application.

204: Determine a plurality of second parameters based on the indicators of the electrical parameters of the plurality of first components, the connection relationship between the plurality of first components, and the component feature of each first component.

In this embodiment, because the first circuit diagram further includes the connection relationship between the plurality of first components, and each first component includes the component feature, the plurality of second parameters can be further determined based on the indicators of the electrical parameters of the plurality of first components, the connection relationship between the plurality of first components, and the component feature of each first component. Specifically, the plurality of second parameters are determined based on the indicators of the electrical parameters of the plurality of first components, the connection relationship between the plurality of first components, and the component feature of each first component by using a formula and in a simulation decision manner; or the plurality of second parameters are determined based on the indicators of the electrical parameters of the plurality of first components, the connection relationship between the plurality of first components, and the component feature of each first component by using a component feature library lookup table. In addition, the second parameters are in a one-to-one correspondence with the first parameters.

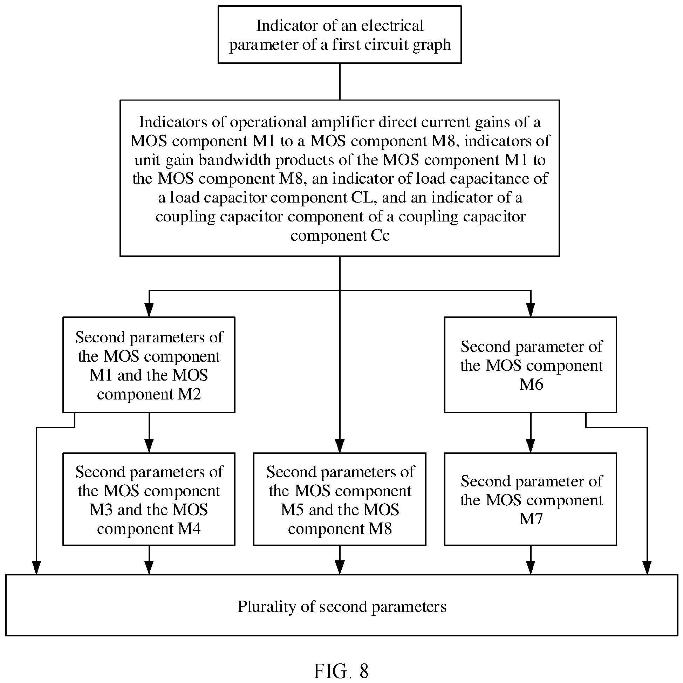

For ease of understanding, description is provided based on the examples in FIG. 3 to FIG. 7. FIG. 8 is a schematic flowchart of determining a second parameter according to an embodiment of this application. As shown in FIG. 8, the indicator of the electrical parameter of the first circuit diagram is input into the system design functional component, and the system design functional component can calculate and output indicators of operational amplifier direct current gains of the MOS component M1 to the MOS component M8, indicators of unit gain bandwidth products of the MOS component M1 to the MOS component M8, an indicator of load capacitance of the load capacitor component CL, and an indicator of a coupling capacitor of the coupling capacitor Cc by using the connection relationship between the first components and the component feature of each first component.

Based on this, the designer invokes the system design functional component, and the system design functional component calculates and outputs a transconductance value A based on an input noise indicator in the indicator of the electrical parameter of the first circuit diagram, and specifies that the output transconductance value A corresponds to a transconductance value of the MOS component M1 and a transconductance value of the MOS component M2 in FIG. 3, so that the output transconductance value A can be associated with the first circuit diagram shown in FIG. 3. Then, the system design functional component calculates and outputs a capacitance value A based on the obtained transconductance value A and a calculated unit gain bandwidth product, and specifies that the output capacitance value A corresponds to a capacitance value of the coupling capacitor Cc in FIG. 3. The system design functional component further obtains first-stage output impedance through calculation based on an input first-stage gain and the transconductance value A, and specifies that the obtained first-stage output impedance corresponds to the MOS component M2 and the MOS component M4 in FIG. 3.

Further, based on the transconductance value A output by a noise module, an allocated proportion of a first-stage current, and an indicator of output impedance of the first circuit diagram, the circuit design functional component obtains length values in process parameters of the MOS component M1 and the MOS component M2 through calculation by invoking a component feature library lookup table. Then, the circuit design functional component in the component library continues to be invoked to determine width values in the process parameters of the MOS component M1 and the MOS component M2 based on the transconductance value A output by the noise module and the obtained L values. In this way, a second parameter of the MOS component M1 and a second parameter of the MOS component M2 are obtained. Similarly, second parameters of the other MOS components M3 to M8 can be calculated in a similar manner, and details are not described herein.

205: Invoke the process design kit PDK to replace each first component in the first circuit diagram, to obtain a third circuit.

In this embodiment, the process design kit PDK including a plurality of component models is first obtained, and then the PDK is invoked to replace each first component in the first circuit diagram, to obtain the third circuit. In this case, the third circuit includes a plurality of third components, the third components are components obtained by replacing the first components with component models in the PDK, and process parameters of the third components are the second parameters determined in step 204. Specifically, because the PDK includes a plurality of component models with different process parameters, based on the second parameters determined in step 204, the PDK is searched for component models whose process parameters are the second parameters, and the corresponding first components are replaced with the component models. In this case, the third circuit whose component parameters are the second parameters can be obtained.

206: Simulate each third component in the third circuit, to obtain a plurality of circuit simulation results of the first circuit diagram.

In this embodiment, each third component in the third circuit is simulated, to obtain the plurality of circuit simulation results of the first circuit diagram. In this case, the plurality of circuit simulation results of the first circuit diagram are electrical parameters obtained by simulating all first components in the first circuit diagram. Specifically, each third component in the third circuit needs to be simulated by using the circuit simulation functional component, there are at least two types of simulation performed by the circuit simulation functional component, and different types of simulation are used to obtain different circuit simulation results. It should be understood that the simulation types in this embodiment include but are not limited to AC simulation, TRAN simulation, and DC simulation. Optionally, a conducted simulation behavior can be further evaluated by using a non-linear distortion value obtained by performing THD simulation, and a THD value is specifically obtained through calculation by using a type of performed simulation, simulation excitation, and an obtained simulation result.

Further, after the plurality of circuit simulation results of the first circuit diagram are obtained, it needs to be determined whether the plurality of circuit simulation results of the first circuit diagram meet the indicators of the electrical parameters of the plurality of first components. If the indicators are met, step 207 is to be performed; or if the indicators are not met, step 208 is to be performed.

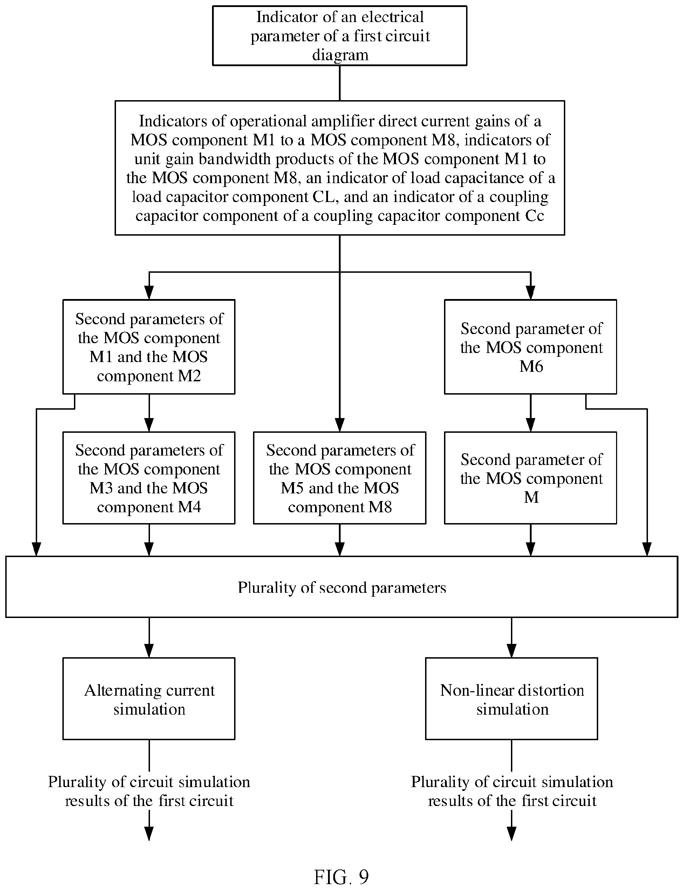

For ease of understanding, based on the examples in FIG. 3 to FIG. 8, a manner of performing AC simulation and evaluating AC simulation by using a non-linear distortion value obtained through THD simulation is described. FIG. 9 is a schematic flowchart of obtaining a plurality of circuit simulation results of a first circuit diagram according to an embodiment of this application. As shown in FIG. 9, after the plurality of second parameters are determined in FIG. 8, a simulation iteration procedure is performed by invoking the circuit simulation functional component in the functional component library. The indicator of the electrical parameter of the first circuit diagram can be obtained in step 202, and the indicators of the electrical parameters of the plurality of first components can be obtained by decomposing the indicator of the electrical parameter of the first circuit diagram by using the system design functional component.

Based on this, the designer sets and runs, on the circuit simulation functional component, the indicator of the electrical parameter of the first circuit diagram, including an indicator of an operational amplifier direct current gain of the first circuit diagram, an indicator of a unit gain bandwidth product of the first circuit diagram, an indicator of load capacitance of the first circuit diagram, and an indicator of a coupling capacitorcomponent in the first circuit diagram. A user invokes the basic procedure functional component, and the basic procedure functional component performs determining based on simulation results output by the circuit simulation functional component and the indicators of the electrical parameters of the plurality of first components that are obtained through decomposition by the system design functional component. In addition, THD simulation can be used to verify harmonic distortion performance of the first circuit diagram. Determining on simulation results (that is, obtained THD values) output after THD simulation needs to be performed based on the indicators (that is, THD indicators) of the electrical parameters of the plurality of first components that are obtained through decomposition by the system design functional component, so that it can be determined whether the plurality of circuit simulation results of the first circuit diagram meet the indicators of the electrical parameters of the plurality of first components.

207: Determine that the plurality of circuit simulation results of the first circuit diagram meet the indicators of the electrical parameters of the plurality of first components, and output a second circuit diagram constructed by a plurality of second components.

In this embodiment, when the plurality of circuit simulation results of the first circuit diagram meet the indicators of the electrical parameters of the plurality of first components, the second circuit diagram constructed by the plurality of second components can be output. In this case, the second components include the second parameters determined in step 204. Optionally, in actual application, a result display interface can be further provided, to display the second circuit diagram and the obtained plurality of circuit simulation results through the result display interface.

Specifically, the second circuit diagram further includes a connection relationship between the plurality of second components, and each second component includes a component feature. It should be understood that the connection relationship between the plurality of second components in the obtained second circuit diagram is the same as the connection relationship between the plurality of first components in the first circuit diagram, that is, a topological relationship formed by connecting ports of the plurality of second components by using a wire is the same as the topological relationship formed by connecting the ports of the plurality of first components by using a wire. In addition, because a component feature is specifically a component attribute of a component, the component features also change when the first parameters are replaced with the second parameters. Therefore, component features of the second components are different from the component features of the first components.

208: Determine that the plurality of circuit simulation results of the first circuit diagram do not meet the indicators of the electrical parameters of the plurality of first components, and re-determine a plurality of second parameters.

In this embodiment, when the plurality of circuit simulation results of the first circuit diagram do not meet the indicators of the electrical parameters of the plurality of first components, the plurality of second parameters are to be re-determined, that is, step 204 is to be performed again.

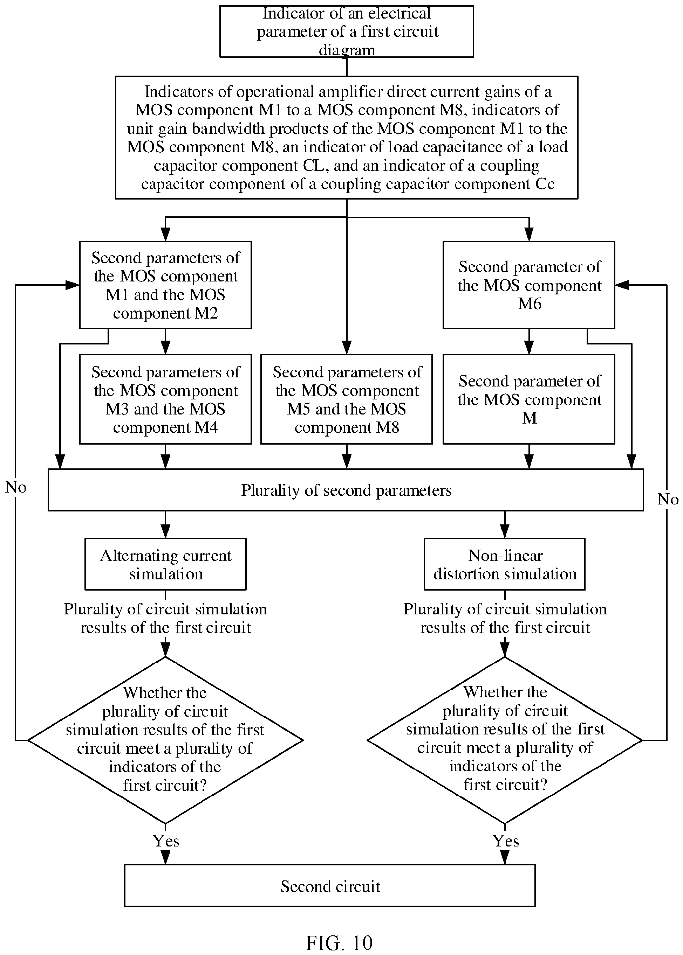

For ease of understanding of step 207 and step 208, description is provided based on the example in FIG. 9. FIG. 10 is a schematic flowchart of a circuit design according to an embodiment of this application. As shown in FIG. 10, when circuit simulation results output by AC simulation meet the indicators of the electrical parameters of the plurality of first components, and circuit simulation results output by THD simulation also meet the indicators of the electrical parameters of the plurality of first components, the second circuit diagram constructed by the plurality of second components is output. In addition, when the circuit simulation results output by AC simulation do not meet the indicators of the electrical parameters of the plurality of first components, extension to the previous system design functional component is performed by using a connection line, to trigger a subsequent procedure of the system design functional component to adjust the second parameters, until output simulation results meet the indicators of the electrical parameters of the plurality of first components.

In addition, when the circuit simulation results output by THD simulation do not meet the indicators of the electrical parameters of the plurality of first components, the first-stage gain and a length value in a second parameter of the MOS component M6 are triggered to be adjusted, until outputs meet the indicators of the electrical parameters of the plurality of first components. That is, when all circuit simulation results output by simulation meet the indicators of the electrical parameters of the first components, the entire design procedure ends, and the second circuit diagram constructed by the plurality of second components is output.

In a possible implementation, a circuit design software framework may convert the design flowchart described in the foregoing embodiment into a specific computing operation program based on a corresponding functional component and a relationship, and load external input databases such as a standard library, a component feature library, a specific PDK, a simulation model file, and simulation excitation. A software background executes a program action, invokes various circuit simulators to perform corresponding simulation actions, extracts data of simulation results, executes all procedure actions based on procedure logic, and output a final circuit diagram (the second circuit diagram) that is based on an actual process and an evaluation report that is based on a SPICE simulation result.

In a possible implementation, the functional component library can provide a functional component of an available procedure editing interface and software code of a function corresponding to each functional component, and provide a component parameter that can be specified and that is corresponding to the first circuit diagram.

It can be learned from FIG. 2 and the embodiment corresponding to FIG. 2 that, after entering the first circuit diagram and the indicator of the electrical parameter of the first circuit diagram, the designer manually triggers EDA software to execute a design procedure based on the design flowchart. The EDA software first converts the design flowchart into actual running program code, then implements calculation processing on the process parameter of each first component in the first circuit diagram based on a functional component in the functional component library, invokes a PDK to replace the first components in the first circuit diagram with component models to obtain the third circuit, then invokes a simulator to perform SPICE simulation on the third circuit to obtain a simulation result, performs determining based on the simulation result and adjusts the process parameters of the components, finally outputs a final circuit diagram when execution based on the design procedure is completed, and may output a simulation report. The entire procedure is automatically completed. The designer can also add a breakpoint and printing in the design flowchart, to perform an interactive operation. Based on this, when a process of the first circuit diagram changes, the designer does not need to enter the indicator of the electrical parameter of the first circuit diagram again. Therefore, the second circuit diagram can still be output based on the indicator of the electrical parameter of the first circuit diagram, to implement design reuse of the indicator of the electrical parameter of the first circuit diagram. In addition, alternatively, after the indicator of the electrical parameter of the first circuit diagram is adjusted, the designer does not need to specify a new PDK. Therefore, the second circuit diagram can still be output based on the original PDK, to implement design reuse of the PDK, thereby improving circuit design efficiency.

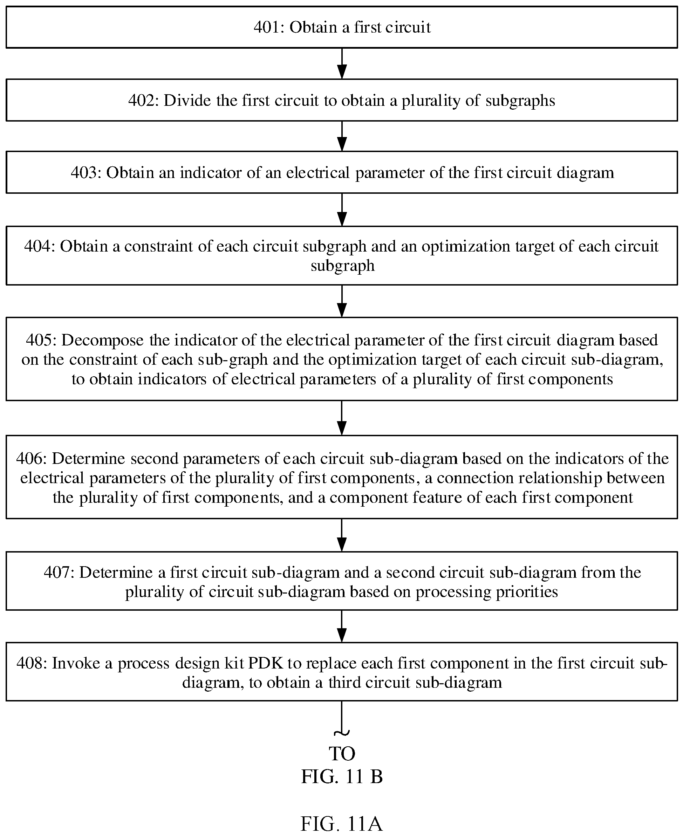

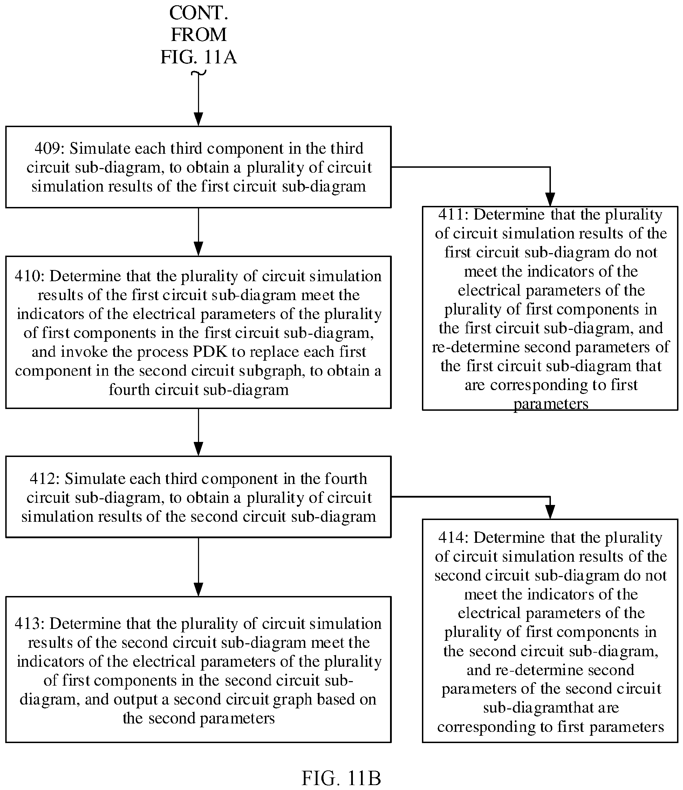

In another implementation, a circuit graphmay be further subdivided into a plurality of circuit sub-diagrams, and then parameter determining and simulation are separately performed on the plurality of circuit sub-diagrams. When a simulation result of a circuit sub-diagram meets a corresponding circuit indicator, parameter determining and simulation procedures of a next circuit sub-diagram are further performed. For details, refer to FIG. 11A and FIG. 11B. FIG. 11A and FIG. 11B are a schematic diagram of another embodiment of a circuit design according to an embodiment of this application. As shown in FIG. 11A and FIG. 11B, another embodiment of a circuit design method is described below.

401: Obtain a first circuit diagram.

In this embodiment, the first circuit diagram is obtained, where the first circuit diagram is constructed based on a plurality of first components, and the first components include first parameters. A specific manner of obtaining the first circuit diagram, the first components, the first parameters, and the like are similar to those described in step 201, and details are not described herein.

402: Divide the first circuit diagram to obtain a plurality of circuit sub-diagrams.

In this embodiment, the first circuit diagram obtained in step 401 is divided to obtain the plurality of circuit sub-diagrams. Each circuit sub-diagram includes at least one first component, there are processing priorities for the plurality of circuit sub-diagrams, and the processing priorities indicate a sequence of simulating the plurality of circuit sub-diagrams. For example, circuit diagrama circuit sub-diagram A, a circuit sub-diagram B, and a circuit sub-diagram C are obtained by dividing the first circuit diagram, and processing priorities for the circuit sub-diagram A, the circuit sub-diagram B, and the circuit sub-diagram C are from the circuit sub-diagram A to the circuit sub-diagram C to the circuit sub-diagram B. In this case, in a subsequent parameter determining procedure, a parameter of the circuit sub-diagram A should be determined first, and when a simulation result of the circuit sub-diagram A meets a circuit indicator of the circuit sub-diagram A, parameter determining and simulation of the circuit sub-diagram C are further performed. When a simulation result of the circuit sub-diagram C meets a circuit indicator of the circuit sub-diagram C, parameter determining and simulation of the circuit sub-diagram B are further performed. This is the processing priority of each circuit sub-diagram.

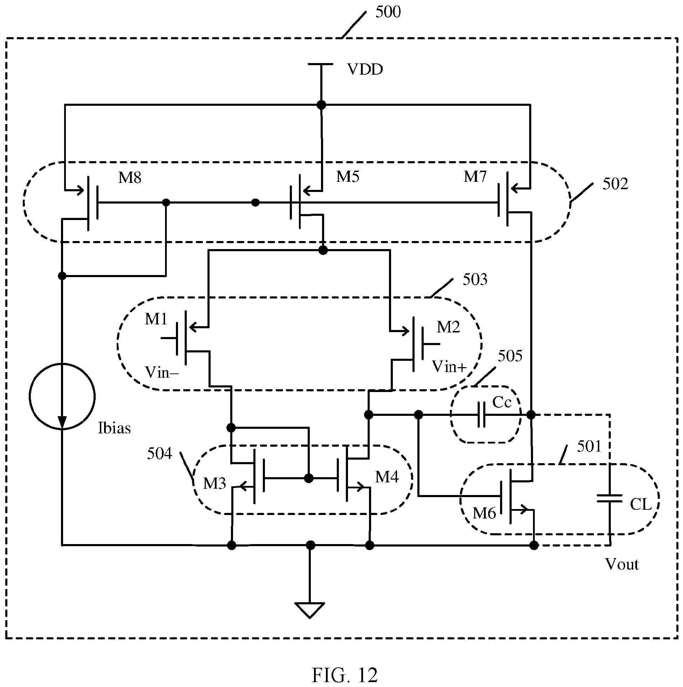

For ease of understanding, the first circuit diagram described in FIG. 3 is used as an example for description. FIG. 12 is a schematic diagram of an embodiment of dividing a first circuit diagram to obtain a plurality of circuit sub-diagrams according to an embodiment of this application. As shown in FIG. 12, circuit diagrama circuit sub-diagram 501, a circuit sub-diagram 502, a circuit sub-diagram 503, a circuit sub-diagram 504, and a circuit sub-diagram 505 may be obtained by dividing a first circuit diagram 500, and processing priorities for the plurality of circuit sub-diagrams are as follows: the circuit sub-diagram 501, the circuit sub-diagram 502, the circuit sub-diagram 503, the circuit sub-diagram 504, and the circuit sub-diagram 505. It should be understood that the circuit sub-diagrams shown in FIG. 12 and the processing priorities for the plurality of circuit sub-diagrams are determined based on the first circuit diagram and a circuit design requirement, and should not be construed as a limitation on this solution.

Specifically, each sub-diagram includes a connection relationship between a plurality of first components, each first component includes a component feature, the connection relationship between the plurality of first components is a topological relationship formed by connecting ports of the plurality of first components by using a wire, and the component feature of the first component is a component attribute of the first component. In this case, the connection relationship between the plurality of first components included in each sub-diagram is the same as a connection relationship between the plurality of first components included in the first circuit diagram. In addition, because parameters of the first components are not adjusted, component features of the first components included in each sub-diagram are also the same as component features of the first components included in the first circuit diagram.

403: Obtain an indicator of an electrical parameter of the first circuit diagram.

In this embodiment, the indicator of the electrical parameter of the first circuit diagram is obtained. A manner of obtaining the indicator of the electrical parameter of the first circuit diagram, and the indicator of the electrical parameter of the first circuit diagram are similar to those described in step 202, and details are not described herein.

404: Obtain a constraint of each circuit sub-diagram and an optimization target of each circuit sub-diagram.

In this embodiment, the constraint of each circuit sub-diagram and the optimization target of each circuit sub-diagram further need to be obtained. The constraint is a change range of an electrical parameter of a first component included in the circuit sub-diagram, and the optimization target is a target value of an electrical parameter of the circuit sub-diagram.

Specifically, the constraint of each circuit sub-diagram includes but is not limited to a percentage of contribution of a first component in the circuit sub-diagram to noise, allocation of a first-stage gain and a second-stage gain in the circuit sub-diagram, and the like. In addition, the optimization target of each circuit sub-diagram includes but is not limited to an optimal area, optimal power consumption, a quality factor value, and the like. Specifically, a designer needs to impose a limitation based on the first components included in each sub-diagram. Therefore, the constraint of each circuit sub-diagram and the optimization target of each circuit sub-diagram are not limited. For ease of understanding, the circuit sub-diagram 502 shown in FIG. 12 is used as an example for description. A constraint of the circuit sub-diagram 502 includes that a percentage of contribution of a MOS component M5 to noise is 50%, a percentage of contribution of a MOS component M8 to noise is 20%, and a percentage of contribution of a MOS component M7 to noise is 30%, and an optimization target of the circuit sub-diagram 502 includes that total power consumption of the MOS component M5, the MOS component M8, and the MOS component M7 accounts for 20% of running power consumption of the first circuit diagram. It should be understood that the foregoing example is merely used to understand this solution, and a specific constraint and a specific optimization target need to be determined based on the first component included in each circuit sub-diagram and an overall requirement of the first circuit diagram.

405: Decompose the indicator of the electrical parameter of the first circuit diagram based on the constraint of each sub-diagram and the optimization target of each circuit sub-diagram, to obtain indicators of electrical parameters of the plurality of first components.

In this embodiment, the indicator of the electrical parameter of the first circuit diagram is decomposed based on the constraint of each sub-diagram and the optimization target of each circuit sub-diagram, to obtain the indicators of the electrical parameters of the plurality of first components.

Specifically, after entering the indicator of the electrical parameter of the first circuit diagram and entering the constraint of each circuit sub-diagram and the optimization target of each circuit sub-diagram, the designer can invoke a system design functional component and a circuit design functional component from a functional component library. Specifically, the system design functional component is instantiated, and the system design functional component is used to decompose the indicator of the electrical parameter of the first circuit diagram to obtain the indicators of the electrical parameters of the plurality of first components, to reflect an indicator of an electrical parameter of each first component in the first circuit diagram. In this way, an operation of reflecting process parameters of the first components in the first circuit diagram in different functional components can be performed, and then the process parameters of the first components are transferred, by using a connection line, to the system design functional component that is invoked from the component library, so that the system design functional component becomes an actual instantiated functional module. Therefore, the first circuit diagram can be decoupled from an actual process parameter.

Based on this, all design flowcharts described above are design flowcharts of the first circuit diagram. Because the first circuit diagram is divided into the plurality of circuit sub-diagrams in this embodiment, specific steps of the design flowchart of the first circuit diagram can be split into design flowchartdesign flowcharts of all circuit sub-diagrams based on the plurality of circuit sub-diagrams obtained through splitting. Based on this, the entire first circuit diagram is designed by using the design flowchart of the first circuit diagram, and then a design flowchartdesign flowchart of each circuit sub-diagram is executed based on the processing priority. In addition, based on whether a simulation result of a circuit sub-diagram meets an indicator of an electrical parameter of a first component in the circuit sub-diagram, it is determined whether to adjust a circuit indicator of the first component in the circuit sub-diagram or invoke, based on the processing priorities, a design flowchart corresponding to a subsequent circuit sub-diagram to complete simulation. The design flowchart of each circuit sub-diagram is used to separately perform simulation on the circuit sub-diagram.

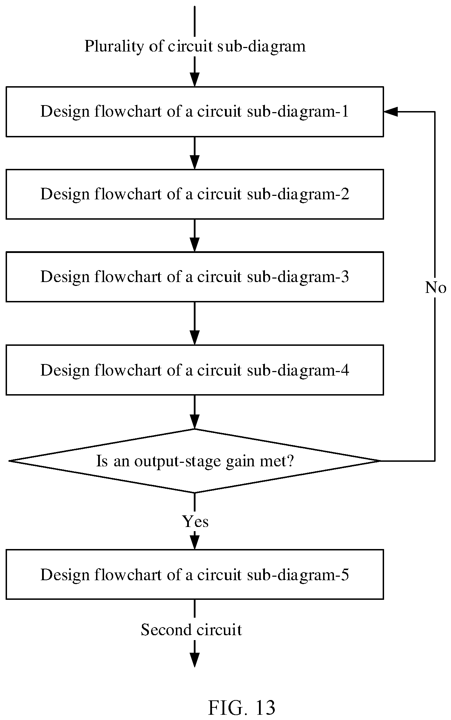

For ease of understanding, the design flowchart of the first circuit diagram is described based on the plurality of circuit sub-diagrams shown in FIG. 12. FIG. 13 is a schematic diagram of an embodiment of a design flowchart of a first circuit diagram according to an embodiment of this application. As shown in FIG. 13, a circuit sub-diagram-1 is the circuit sub-diagram 501 in FIG. 12, a circuit sub-diagram-2 is the circuit sub-diagram 502 in FIG. 12, a circuit sub-diagram-3 is the circuit sub-diagram 503 in FIG. 12, a circuit sub-diagram-4 is the circuit sub-diagram 504 in FIG. 12, and a circuit sub-diagram-5 is the circuit sub-diagram 505 in FIG. 12. Based on this, a design flowchart of the circuit sub-diagram-1 first needs to be completed, and by analogy, design flowcharts of the circuit sub-diagram-2 to the circuit sub-diagram-4 are completed, based on the connection relationship of the first circuit diagram shown in FIG. 3 and the connection relationships of the plurality of circuit sub-diagrams shown in FIG. 12.

Further, after the design flowcharts of the circuit sub-diagram-1 to the circuit sub-diagram-4 are connected, it further needs to be determined whether an output-stage gain is met. It should be understood that the determining herein is a determining procedure added based on the connection relationship of the first circuit diagram shown in FIG. 3 and the connection relationships of the plurality of circuit sub-diagrams shown in FIG. 12. In actual application, for different first circuit diagrams, another determining condition or no determining condition may exist herein. Therefore, this should not be construed as a limitation on this solution. Based on this, when the output-stage gain is met, a design flowchart of the circuit sub-diagram-5 is completed, and a second circuit diagram is output after the design flowchart of the circuit sub-diagram-5 is completed. However, when the output-stage gain is not met, indicators of electrical parameters of the first components in each circuit sub-diagram need to be adjusted, and the foregoing steps are performed again, until the constraint can be met. It should be understood that FIG. 12 is merely used to understand this solution, and should not be construed as a limitation on this solution.

Further, based on the plurality of circuit sub-diagrams shown in FIG. 12, the following describes indicators of electrical parameters of first components in the circuit sub-diagram-1 and indicators of electrical parameters of first components in the circuit sub-diagram-5. It can be learned from the foregoing embodiment that there are some fixed formulas and parameter settings inside the system design functional component, and the fixed formulas and the parameter settings are from a textbook or are output by the designer through experience summarization, or may be customized by the designer. Therefore, during indicator decomposition, the system design functional component decomposes the indicator of the first circuit diagram by using the constraint of each sub-diagram and the optimization target of each circuit sub-diagram, and invoking the fixed formulas and the parameter settings.

For example, for the indicators of the electrical parameters of the first components in the circuit sub-diagram-1, the indicator of the electrical parameter of the first circuit diagram needs to be decomposed by using a fixed formula (not shown above) and based on a constraint and an optimization target that are of the circuit sub-diagram-1, to obtain the indicators of the electrical parameters of the first components in the circuit sub-diagram-1. For example, the constraint of the circuit sub-diagram-1 includes an effective ratio of effects, the optimization target of the circuit sub-diagram-1 includes an output-stage gain, and the circuit sub-diagram-1 (the circuit sub-diagram 501 in FIG. 12) includes a MOS component M6, a load capacitor component CL, and an external module port Vout. The indicator of the electrical parameter of the first circuit diagram is decomposed based on the constraint and the optimization target that are of the circuit sub-diagram-1, so that the indicators of the electrical parameters of the first components in the circuit sub-diagram-1 can be obtained.

For example, the indicators of the electrical parameters of the first components in the circuit sub-diagram-1 are an indicator of an output swing amplitude (that is, an indicator of an electrical parameter of the external module port Vout), an indicator of a phase margin (that is, an indicator of an electrical parameter of the MOS component M6), and an indicator of load capacitance (that is, an indicator of an electrical parameter of the load capacitor component CL).

In addition, a constraint of the circuit sub-diagram-5 includes initial capacitance, and the initial capacitance is specifically a value obtained by dividing transconductance of a MOS component M1 by a gain bandwidth product. An optimization target of the circuit sub-diagram-5 includes an output-stage gain. The circuit sub-diagram-5 (the circuit sub-diagram 505 in FIG. 12) includes a coupling capacitor Cc. The indicator of the electrical parameter of the first circuit diagram is decomposed by using a fixed formula (not shown above) and based on the constraint and the optimization target that are of the circuit sub-diagram-5, to obtain the indicators of the electrical parameters of the first components in the circuit sub-diagram-5. For example, the indicators of the electrical parameters of the first components in the circuit sub-diagram-5 are an indicator of an output swing amplitude and an indicator of a gain bandwidth product (that is, an indicator of an electrical parameter of the coupling capacitor). It should be understood that the foregoing example is merely used to understand this solution, and a specific indicator needs to be flexibly determined and decomposed based on an actual situation.

406: Determine second parameters of each circuit sub-diagram based on the indicators of the electrical parameters of the plurality of first components, the connection relationship between the plurality of first components, and the component feature of each first component.

In this embodiment, each sub-diagram also includes the connection relationship between the plurality of first components, and each first component includes the component feature. The second parameters of each circuit sub-diagram can be determined based on the indicators of the electrical parameters of the first components that are obtained in step 405, the connection relationship between the plurality of first components, and the component feature of each first component.

Specifically, the plurality of second parameters are determined based on the indicators of the electrical parameters of the plurality of first components, the connection relationship between the plurality of first components, and the component feature of each first component by using a formula and in a simulation decision manner; or the plurality of second parameters are determined based on the indicators of the electrical parameters of the plurality of first components, the connection relationship between the plurality of first components, and the component feature of each first component by using a component feature library lookup table. A manner of determining the second parameters of each circuit sub-diagram is similar to the manner of determining the second parameters of the first circuit diagram in step 204, and details are not described herein.

407: Determine a first circuit sub-diagram and a second circuit sub-diagram from the plurality of circuit sub-diagrams based on the processing priorities.

In this embodiment, the first circuit sub-diagram and the second circuit sub-diagram are determined from the plurality of circuit sub-diagrams based on the processing priorities for all circuit sub-diagrams, the first circuit sub-diagram is before the second circuit sub-diagram in the simulation sequence, and the second circuit sub-diagram is a circuit sub-diagram to be last simulated, as indicated by the processing priorities. For example, based on the plurality of circuit sub-diagrams shown in FIG. 12, the second circuit sub-diagram is the circuit sub-diagram 505, and the first circuit sub-diagram may be any one of the circuit sub-diagram 501, the circuit sub-diagram 502, the circuit sub-diagram 503, and the circuit sub-diagram 504, provided that the first circuit sub-diagram is before the second circuit sub-diagram in the simulation sequence. This is not limited herein.

It can be learned that the second parameters of each circuit sub-diagram in step 406 include second parameters of the first circuit sub-diagram and second parameters of the second circuit sub-diagram.

408: Invoke a process design kit PDK to replace each first component in the first circuit sub-diagram, to obtain a third circuit sub-diagram.

In this embodiment, the process design kit PDK including a plurality of component models is first obtained, and then the PDK is invoked to replace each first component in the first circuit sub-diagram, to obtain the third circuit sub-diagram. In this case, the third circuit sub-diagram includes a plurality of third components, the third components are components obtained by replacing the first components with component models in the PDK, and process parameters of the third components are the second parameters of the first circuit sub-diagram that are determined in step 406. Specifically, because the PDK includes a plurality of component models with different process parameters, based on the second parameters of each circuit sub-diagram that are determined in step 406, the PDK is searched for component models whose process parameters are the second parameters, and the corresponding first components are replaced with the component models. In this case, the third circuit sub-diagram whose component parameters are the second parameters can be obtained.

409: Simulate each third component in the third circuit sub-diagram, to obtain a plurality of circuit simulation results of the first circuit sub-diagram.

In this embodiment, each third component in the third circuit sub-diagram is simulated, to obtain the plurality of circuit simulation results of the first circuit sub-diagram. In this case, the plurality of circuit simulation results of the first circuit sub-diagram are electrical parameters obtained by simulating all third components in the third circuit sub-diagram. Specifically, each third component in the third circuit sub-diagram needs to be simulated by using a circuit simulation functional component, there are at least two types of simulation performed by the circuit simulation functional component, and different types of simulation are used to obtain different circuit simulation results. It should be understood that the simulation types in this embodiment include but are not limited to AC simulation, TRAN simulation, and DC simulation. Optionally, a conducted simulation behavior can be further evaluated by using a non-linear distortion value obtained by performing THD simulation, and a THD value is specifically obtained through calculation by using a type of performed simulation, simulation excitation, and an obtained simulation result.

Further, after the plurality of circuit simulation results of the first circuit sub-diagram are obtained, it needs to be determined whether the plurality of circuit simulation results of the first circuit sub-diagram meet the indicators of the electrical parameters of the plurality of first components in the first circuit sub-diagram. If the indicators are met, step 410 is to be performed; or if the indicators are not met, step 411 is to be performed.

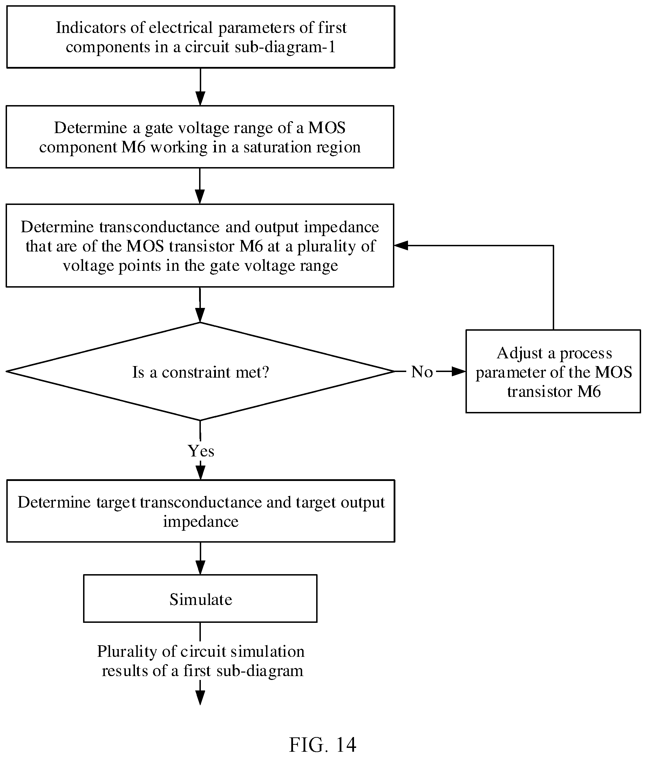

For ease of understanding, based on the plurality of circuit sub-diagrams shown in FIG. 12 and the indicators of the electrical parameters of the first components in the circuit sub-diagram-1 shown in step 405, the following describes in detail a procedure of simulating the circuit sub-diagram-1. FIG. 14 is a schematic diagram of an embodiment of a design flowchart of a circuit sub-diagram according to an embodiment of this application. As shown in FIG. 14, in a design flowchart corresponding to the circuit sub-diagram-1, because the circuit sub-diagram-1 includes the MOS component M6, and the indicators of the electrical parameters of the first components in the circuit sub-diagram-1 are the indicator of the output swing amplitude, the indicator of the phase margin, and the indicator of the load capacitance, in this case, the constraint of the circuit sub-diagram-1 can be further obtained: an output-stage gain and an effective ratio of effects. Based on experience of the designer, it needs to be first determined that the MOS component M6 works in a saturation region, and a gate voltage range of the MOS component M6 working in the saturation region may be obtained with reference to numerical calculation and a component feature library lookup table. First, multipoint scanning is performed on the gate voltage range, and transconductance and output impedance that are of the MOS component M6 are determined based on the component feature library lookup table during scanning. In this case, an actual output-stage gain is obtained through calculation. Then, it is determined whether the actual output-stage gain meets the output-stage gain in the constraint.

Based on this, when the actual output-stage gain does not meet the output-stage gain in the constraint, a process parameter of the MOS component M6 needs to be adjusted, for example, a channel length (L) or a channel width (W) of the MOS component M6; transconductance and output impedance that are of the MOS component M6 are re-determined based on an adjusted process parameter of the MOS component M6, and an actual output-stage gain is obtained through calculation; and when the actual output-stage gain meets the output-stage gain in the constraint, the transconductance and the output impedance that meet the constraint are stored. Because multipoint scanning needs to be performed on the gate voltage range, after multipoint scanning on the gate voltage range is completed, transconductance and output impedance that correspond to a smallest power consumption value obtained through calculation are selected from a plurality of pairs of stored transconductance and output impedance as target transconductance and target output impedance. Based on this, after the target transconductance and the target output impedance are determined, each third component in the third circuit sub-diagram is simulated, to obtain a plurality of circuit simulation results of the first circuit sub-diagram, so that it can be determined whether the plurality of circuit simulation results of the first circuit sub-diagram meet the indicators of the electrical parameters of the plurality of first components in the first circuit sub-diagram.

410: Determine that the plurality of circuit simulation results of the first circuit sub-diagram meet the indicators of the electrical parameters of the plurality of first components in the first circuit sub-diagram, and invoke the PDK to replace each first component in the second circuit sub-diagram, to obtain a fourth circuit sub-diagram.

In this embodiment, when the plurality of circuit simulation results of the first circuit sub-diagram meet the indicators of the electrical parameters of the plurality of first components in the first circuit sub-diagram, the PDK can be invoked again to replace each first component in the second circuit sub-diagram, to obtain the fourth circuit sub-diagram. In this case, the fourth circuit sub-diagram includes a plurality of third components, the third components are components obtained by replacing the first components with component models, and process parameters of the third components are the second parameters.

Specifically, the process design kit PDK including a plurality of component models is first obtained, and then the PDK is invoked to replace each first component in the second circuit sub-diagram, to obtain the fourth circuit sub-diagram. In this case, the fourth circuit sub-diagram includes a plurality of third components, the third components are components obtained by replacing the first components with component models in the PDK, and process parameters of the third components are the second parameters of the second circuit sub-diagram that are determined in step 406. Specifically, because the PDK includes a plurality of component models with different process parameters, based on the second parameters of each circuit sub-diagram that are determined in step 406, the PDK is searched for component models whose process parameters are the second parameters, and the corresponding first components are replaced with the component models. In this case, the fourth circuit sub-diagram whose component parameters are the second parameters can be obtained.

411: Determine that the plurality of circuit simulation results of the first circuit sub-diagram do not meet the indicators of the electrical parameters of the plurality of first components in the first circuit sub-diagram, and re-determine second parameters of the first circuit sub-diagram.

In this embodiment, when it is determined that the plurality of circuit simulation results of the first circuit sub-diagram do not meet the indicators of the electrical parameters of the plurality of first components in the first circuit sub-diagram, the second parameters of the first circuit sub-diagram are to be re-determined, that is, step 406 is performed again to re-determine the second parameters of the first circuit sub-diagram. It should be understood that, in this case, second parameters of another circuit sub-diagram do not need to be re-determined.

412: Simulate each third component in the fourth circuit sub-diagram, to obtain a plurality of circuit simulation results of the second circuit sub-diagram.

In this embodiment, each third component in the fourth circuit sub-diagram is simulated, to obtain the plurality of circuit simulation results of the second circuit sub-diagram. In this case, the plurality of circuit simulation results of the second circuit sub-diagram are electrical parameters obtained by simulating all third components in the fourth circuit sub-diagram. Specifically, each third component in the fourth circuit sub-diagram needs to be simulated by using the circuit simulation functional component, there are at least two types of simulation performed by the circuit simulation functional component, and different types of simulation are used to obtain different circuit simulation results. It should be understood that the simulation types in this embodiment include but are not limited to AC simulation, TRAN simulation, DC simulation, and the like.

Further, after the plurality of circuit simulation results of the second circuit sub-diagram are obtained, it needs to be determined whether the plurality of circuit simulation results of the second circuit sub-diagram meet the indicators of the electrical parameters of the plurality of first components in the second circuit sub-diagram. If the indicators are met, step 413 is to be performed; or if the indicators are not met, step 414 is to be performed.

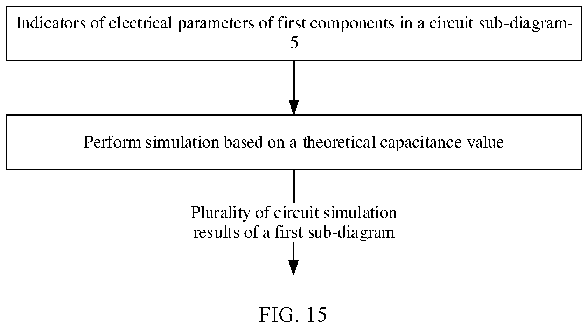

For ease of understanding, based on the plurality of circuit sub-diagrams shown in FIG. 12 and the indicators of the electrical parameters of the first components in the circuit sub-diagram-5 shown in step 405, the following describes in detail a procedure of simulating the circuit sub-diagram-5. FIG. 15 is a schematic diagram of another embodiment of a design flowchart of a circuit sub-diagram according to an embodiment of this application. As shown in FIG. 15, in a design flowchart corresponding to the circuit sub-diagram-5, because the circuit sub-diagram-5 includes the capacitor Cc, and the indicators of the electrical parameters of the first components in the circuit sub-diagram-5 are the indicator of the output swing amplitude and the indicator of the gain bandwidth product, in this case, the constraint of the circuit sub-diagram-5 is initial capacitance. Based on the initial capacitance, in this case, the initial capacitance needs to be traversed at 0.5 to 2 multiples, and simulation is performed with reference to a SPICE netlist generated in the first circuit diagram. The initial capacitance at different multiples corresponds to a plurality of circuit simulation results of the second circuit sub-diagram, so that it can be determined whether the plurality of circuit simulation results of the second circuit sub-diagram meet the indicators of the electrical parameters of the plurality of first components in the second circuit sub-diagram.

413: Determine that the plurality of circuit simulation results of the second circuit sub-diagram meet the indicators of the electrical parameters of the plurality of first components in the second circuit sub-diagram, and output the second circuit diagram based on the second parameters.

In this embodiment, when the plurality of circuit simulation results of the second circuit sub-diagram meet the indicators of the electrical parameters of the plurality of first components in the second circuit sub-diagram, the second circuit diagram is output based on the second parameters. In this case, the second circuit diagram includes a plurality of second components, and process parameters of the second components are the second parameters. Specifically, based on the procedure shown in FIG. 15, the initial capacitance needs to be traversed at 0.5 to 2 multiples, and simulation is performed with reference to the SPICE netlist generated in the first circuit diagram. Therefore, when the plurality of circuit simulation results of the second circuit sub-diagram that are corresponding to the initial capacitance at different multiples all meet the indicator of the gain bandwidth product in the indicators of the electrical parameters of the first components in the circuit sub-diagram-5, a capacitance value (a second parameter) obtained when the phase margin is a maximum value is stored, and the second circuit diagram in which a capacitance value of the capacitor Cc is the second parameter is output.

414: Determine that the plurality of circuit simulation results of the second circuit sub-diagram do not meet the indicators of the electrical parameters of the plurality of first components in the second circuit sub-diagram, and re-determine second parameters of the second circuit sub-diagram.

In this embodiment, it is determined that the plurality of circuit simulation results of the second circuit sub-diagram do not meet the indicators of the electrical parameters of the plurality of first components in the second circuit sub-diagram, and the second parameters of the second circuit sub-diagram are re-determined, that is, step 406 is performed again to re-determine the second parameters of the second circuit sub-diagram. It should be understood that, in this case, second parameters of another circuit sub-diagram do not need to be re-determined.

In a possible implementation, a circuit design software framework may convert the design flowchart described in the foregoing embodiment into a specific computing operation program based on a corresponding functional component and a relationship, and load external input databases such as a standard library, a component feature library, a specific PDK, a simulation model file, and simulation excitation. A software background executes a program action, invokes various circuit simulators to perform corresponding simulation actions, extracts data of simulation results, executes all procedure actions based on procedure logic, and output a final circuit diagram (the second circuit diagram) that is based on an actual process and an evaluation report that is based on a SPICE simulation result.

In a possible implementation, the circuit design functional component library can provide a functional component of an available procedure editing interface and software code of a function corresponding to each functional component, and provide a component parameter that can be specified and that is corresponding to the first circuit diagram.

It can be learned from FIG. 11A and FIG. 11B and the embodiment corresponding to FIG. 11A and FIG. 11B that, after procedure development of an analog circuit is completed based on a model component in the PDK, a fully automatic design of the circuit can be implemented by invoking the design flowcharts (the design flowchart of the first circuit diagram and the design flowchart of each circuit sub-diagram) described in this embodiment. When a design process remains unchanged (that is, the PDK remains unchanged), but the indicator of the electrical parameter of the first circuit diagram is adjusted, the designer does not need to modify the first circuit diagram or the design flowchart, and only needs to modify the indicator of the electrical parameter of each circuit sub-diagram in the design flowchart of the first circuit diagram to complete redesign. In addition, when the design process changes (that is, the PDK changes), but a quantity of ports of the first components in the first circuit diagram remains unchanged, only a component type in the first circuit diagram needs to be modified. If the quantity of ports of the components changes, the connection relationship of the first circuit diagram is to be modified, and in this case, modification can be completed by configuring a variable related to component port configuration in the design flowchart. After the modification is completed, a corresponding output of the second circuit diagram that meets the indicator of the electrical parameter of the first circuit diagram is generated, to implement design reuse, thereby improving circuit design efficiency.

An embodiment of this application provides a computer program product. The computer program product includes a computer program (which may also be referred to as code or instructions). When the computer program is run, a computer is enabled to perform the method in any one of the foregoing method embodiments.

This application further provides a circuit design device, including at least one processor. The at least one processor is configured to execute a computer program stored in a memory, so that the circuit design device performs the method in any one of the foregoing method embodiments.

It should be understood that the circuit design device may be one or more chips. For example, the circuit design device may be a field programmable gate array (field programmable gate array, FPGA), an application-specific integrated circuit (application specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

An embodiment of this application further provides a circuit design device, including a processor and a communication interface. The communication interface is coupled to the processor. The communication interface is configured to input and/or output information. The information includes at least one of instructions and data. The processor is configured to execute a computer program, so that the circuit design device performs the method in any one of the foregoing method embodiments. It should be understood that the communication interface may be implemented by using same hardware logic, or may be implemented by using different hardware logic. For example, one hardware interface may have only an input function or an output function, or one hardware interface may have both an input function and an output function.

An embodiment of this application further provides a circuit design device, including a processor and a memory. The memory is configured to store a computer program, and the processor is configured to invoke the computer program from the memory and run the computer program, so that the circuit design device performs the method in any one of the foregoing method embodiments.

In an implementation process, the steps in the foregoing methods may be completed by an integrated logic circuit in a form of hardware or instructions in a form of software in the processor. The steps of the methods disclosed with reference to embodiments of this application may be directly implemented by a hardware processor, or may be implemented by using a combination of hardware in a processor and a software module. The software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the steps of the foregoing methods in combination with hardware of the processor. To avoid repetition, details are not described herein.

It should be noted that the processor in embodiments of this application may be an integrated circuit chip and has a signal processing capability. In an implementation process, the steps in the foregoing method embodiments may be completed by an integrated logic circuit in a form of hardware or instructions in a form of software in the processor. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and the logical block diagrams that are disclosed in embodiments of this application. The general-purpose processor may be a microprocessor, or the processor may be any conventional processor or the like. The steps of the methods disclosed with reference to embodiments of this application may be directly implemented by a hardware decoding processor, or may be implemented by using a combination of hardware in a decoding processor and a software module. The software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the steps of the foregoing methods in combination with hardware of the processor.

It may be understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through examples but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the system and methods described in this specification includes but is not limited to these and any memory of another proper type.

According to the methods provided in embodiments of this application, this application further provides a computer program product. The computer program product includes computer program code. When the computer program code is run on a computer, the computer is enabled to perform the method executed by each unit in the embodiments shown in FIG. 3 and FIG. 11A and FIG. 11B.

According to the methods provided in embodiments of this application, this application further provides a computer-readable storage medium. The computer-readable storage medium stores program code. When the program code is run on a computer, the computer is enabled to perform the method executed by each unit in the embodiments shown in FIG. 3 and FIG. 11A and FIG. 11B.

The modules in the foregoing apparatus embodiments completely correspond to the units in the method embodiments. A corresponding module or unit performs a corresponding step. For example, a communication unit (a transceiver) performs a receiving step or a sending step in the method embodiments, and a processing unit (a processor) may perform steps other than the sending step and the receiving step. For a function of a specific unit, refer to a corresponding method embodiment. There may be one or more processors.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. The components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or other forms.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions in embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A circuit design method, comprising:

   obtaining a first circuit diagram, wherein the first circuit diagram is constructed based on a plurality of first components, each first component comprises a first parameter, and the first parameters are parameters that are used in a plurality of processes and that have normalized names; obtaining indicators of electrical parameters of the plurality of first components based on the first circuit diagram; determining a plurality of second parameters based on the indicators of the electrical parameters of the plurality of first components, wherein the second parameters are parameters comprised in a process design kit PDK, and the second parameters are in a one-to-one correspondence with the first parameters;

replacing the first parameters comprised in the first components with the second parameters, to obtain second components, wherein the second components comprise the second parameters; and

outputting a second circuit diagram constructed by the plurality of second components.

2. The method according to claim 1, wherein the first circuit diagram comprises a connection relationship between the plurality of first components, each first component comprises a component feature, the connection relationship between the plurality of first components is a topological relationship formed by connecting ports of the plurality of first components by using a wire, and the component feature of the first component is an electrical parameter of the first component; and

the obtaining indicators of electrical parameters of the plurality of first components based on the first circuit diagram comprises:

obtaining an indicator of an electrical parameter of the first circuit diagram; and

decomposing the indicator of the electrical parameter of the first circuit diagram based on the connection relationship between the plurality of first components and the component feature of each first component, to obtain the indicators of the electrical parameters of the plurality of first components.

3. The method according to claim 2, wherein the determining a plurality of second parameters based on the indicators of the electrical parameters of the plurality of first components comprises:

determining the plurality of second parameters based on the indicators of the electrical parameters of the plurality of first components, the connection relationship between the plurality of first components, and the component feature of each first component by using a formula and in a simulation decision manner; or

determining the plurality of second parameters based on the indicators of the electrical parameters of the plurality of first components, the connection relationship between the plurality of first components, and the component feature of each first component by using a component feature library lookup table.

4. The method according to any one of claims 1 to 3, wherein before the replacing the first parameters comprised in the first components with the second parameters, to obtain second components, the method further comprises:

simulating the first circuit diagram based on the plurality of second parameters, to obtain a plurality of circuit simulation results of the first circuit diagram, wherein the plurality of circuit simulation results of the first circuit diagram are electrical parameters obtained by simulating all first components in the first circuit diagram; and determining that the plurality of circuit simulation results of the first circuit diagram meet the indicators of the electrical parameters of the plurality of first components.

5. The method according to claim 4, wherein the simulating the first circuit diagram based on the plurality of second parameters, to obtain a plurality of circuit simulation results of the first circuit diagram comprises:

obtaining a process design kit PDK, wherein the PDK comprises a plurality of component models;

invoking the PDK to replace each first component in the first circuit diagram, to obtain a third circuit, wherein the third circuit comprises a plurality of third components, the third components are components obtained by replacing the first components with component models, and process parameters of the third components are the second parameters; and

simulating each third component in the third circuit, to obtain the plurality of circuit simulation results of the first circuit diagram.

6. The method according to claim 1, wherein the method further comprises:
dividing the first circuit diagram to obtain a plurality of circuit sub-diagrams, wherein the circuit sub-diagram comprises at least one first component, there are processing priorities for the plurality of circuit sub-diagrams, and the processing priorities indicate a sequence of simulating the plurality of circuit sub-diagrams.

7. The method according to claim 6, wherein the method further comprises:

obtaining a constraint of each circuit sub-diagram and an optimization target of each circuit sub-diagram, wherein the constraint is a change range of an electrical parameter of a first component comprised in the circuit sub-diagram, and the optimization target is a target value of an electrical parameter of the circuit sub-diagram; and

the obtaining indicators of electrical parameters of the plurality of first components based on the first circuit diagram comprises:

obtaining an indicator of an electrical parameter of the first circuit diagram; and decomposing the indicator of the electrical parameter of the first circuit diagram based on the constraint of each sub-diagram and the optimization target of each circuit sub-diagram, to obtain the indicators of the electrical parameters of the plurality of first components.

8. The method according to claim 7, wherein each sub-diagram comprises a connection relationship between a plurality of first components, each first component comprises a component feature, the connection relationship between the plurality of first components is a topological relationship formed by connecting ports of the plurality of first components by using a wire, and the component feature of the first component is an electrical parameter of the first component; and

the determining a plurality of second parameters based on the indicators of the electrical parameters of the plurality of first components specifically comprises:

determining the plurality of second parameters based on the indicators of the electrical parameters of the plurality of first components, the connection relationship between the plurality of first components, and the component feature of each first component by using a formula and in a simulation decision manner; or determining the plurality of second parameters based on the indicators of the electrical parameters of the plurality of first components, the connection relationship between the plurality of first components, and the component feature of each first component by using a component feature library lookup table.

9. The method according to any one of claims 6 to 8, wherein the plurality of circuit sub-diagrams comprise a first circuit sub-diagram and a second circuit sub-diagram, the first circuit sub-diagram is before the second circuit sub-diagram in the simulation sequence, and the second circuit sub-diagram is a circuit sub-diagram to be last simulated, as indicated by the processing priorities; and

before the replacing the first parameters comprised in the first components with the second parameters, to obtain second components, the method further comprises:

determining the first circuit sub-diagram and the second circuit sub-diagram from the plurality of circuit sub-diagrams based on the processing priorities;

simulating the first circuit sub-diagram based on the plurality of second parameters, to obtain a plurality of circuit simulation results of the first circuit sub-diagram, wherein the plurality of circuit simulation results of the first circuit sub-diagram are electrical parameters obtained by simulating all first components in the first circuit sub-diagram;

determining that the plurality of circuit simulation results of the first circuit sub-diagram meet the indicators of the electrical parameters of the plurality of first components;

simulating the second circuit sub-diagram based on the plurality of second parameters, to obtain a plurality of circuit simulation results of the second circuit sub-diagram, wherein the plurality of circuit simulation results of the second circuit sub-diagram are electrical parameters obtained by simulating all first components in the second circuit sub-diagram; and

determining that the plurality of circuit simulation results of the second circuit sub-diagram meet the indicators of the electrical parameters of the plurality of first components.

10. The method according to claim 9, wherein the simulating the first circuit sub-diagram based on the plurality of second parameters, to obtain a plurality of circuit simulation results of the first circuit sub-diagram comprises:

obtaining a process design kit PDK, wherein the PDK comprises a plurality of component models;

invoking the PDK to replace each first component in the first circuit sub-diagram, to obtain a third circuit sub-diagram, wherein the third circuit sub-diagram comprises a plurality of third components, the third components are components obtained by replacing the first components with component models, and process parameters of the third components are the second parameters; and

simulating each third component in the third circuit sub-diagram, to obtain the plurality of circuit simulation results of the first circuit sub-diagram; and

the simulating the second circuit sub-diagram based on the plurality of second parameters, to obtain a plurality of circuit simulation results of the second circuit sub-diagram comprises:

obtaining the process design kit PDK, wherein the PDK comprises the plurality of component models;

invoking the PDK to replace each first component in the second circuit sub-diagram, to obtain a fourth circuit sub-diagram, wherein the fourth circuit sub-diagram comprises a plurality of third components, the third components are components obtained by replacing the first components with component models, and process parameters of the third components are the second parameters; and

simulating each third component in the fourth circuit sub-diagram, to obtain the plurality of circuit simulation results of the second circuit sub-diagram.

11. The method according to any one of claims 1 to 10, wherein before the obtaining a first circuit diagram, the method further comprises:

providing a circuit input interface, to receive a circuit input operation through the circuit input interface;
before the obtaining an indicator of an electrical parameter of the first circuit diagram, the method further comprises:

providing a procedure editing interface, to receive an indicator input operation through the procedure editing interface; and
the method further comprises:
providing a result display interface, to display the second circuit diagram and the plurality of circuit simulation results of the first circuit diagram through the result display interface.

12. A circuit design device, comprising:

at least one processor and a communication interface as an input/output interface, wherein the processor is coupled to the communication interface; and
the processor performs the method according to any one of claims 1 to 11 by running code stored in a memory.

13. A computer-readable storage medium, wherein the computer-readable storage medium stores instructions, and when the instructions are run on a computer or a processor, the computer or the processor is enabled to perform the method according to any one of claims 1 to 11.

14. A computer program product, wherein the computer program product comprises instructions, and when the instructions are run on a computer or a processor, the computer or the processor is enabled to perform the method according to any one of claims 1 to 11.

FIG. 1

EP 4 325 391 A1

201: Obtain a first circuit

202: Obtain an indicator of an electrical parameter of the first circuit diagram

203: Decompose the indicator of the electrical parameter of the first circuit diagram based on a connection relationship between a plurality of first components and a component feature of each first component, to obtain indicators of electrical parameters of the plurality of first components

204: Determine a plurality of second parameters based on the indicators of the electrical parameters of the plurality of first components, the connection relationship between the plurality of first components, and the component feature of each first component

205: Invoke a process design kit PDK to replace each first component in the first circuit diagram, to obtain a third circuit

206: Simulate each third component in the third circuit, to obtain a plurality of circuit simulation results of the first circuit diagram

207: Determine that the plurality of circuit simulation results of the first circuit Diagram meet the indicators of the electrical parameters of the plurality of first components, and output a second circuit diagram constructed by a plurality of second components

208: Determine that the plurality of circuit simulation results of the first circuit diagram do not meet the indicators of the electrical parameters of the plurality of first components, and re-determine a plurality of second parameters corresponding to first parameters

FIG. 2

FIG. 3

FIG. 4

EP 4 325 391 A1

(A)

(B)

FIG. 5

301

Functional component library

302

System design
functional component

303

Circuit design
functional component

304

Circuit simulation
functional component

305

Basic procedure
functional component

306

Observation and
positioning
functional component

FIG. 6

701

Functional component library

702

System
design
functional
component

703

Circuit
design
functional
component

704

Circuit
simulation
functional
component

705

Basic
procedure
functional
component

706

Observation
and
positioning
functional
component

Indicator of a
second circuit

Indicator A of
a first circuit

Indicator B of
the first circuit

FIG. 7

```
┌─────────────────────────────────┐
│     Indicator of an electrical    │
│  parameter of a first circuit graph │
└─────────────────────────────────┘
                 │
┌────────────────────────────────────────────┐
│  Indicators of operational amplifier direct current gains of a │
│  MOS component M1 to a MOS component M8, indicators of │
│  unit gain bandwidth products of the MOS component M1 to │
│  the MOS component M8, an indicator of load capacitance of │
│  a load capacitor component CL, and an indicator of a │
│  coupling capacitor component of a coupling capacitor │
│  component Cc │
└────────────────────────────────────────────┘
```

Second parameters of
the MOS component
M1 and the MOS
component M2

Second parameter of
the MOS component
M6

Second parameters of
the MOS component
M3 and the MOS
component M4

Second parameters of
the MOS component
M5 and the MOS
component M8

Second parameter of
the MOS component
M7

Plurality of second parameters

FIG. 8

FIG. 9

Indicator of an electrical
parameter of a first circuit
diagram

Indicators of operational amplifier direct current gains of a
MOS component M1 to a MOS component M8, indicators of
unit gain bandwidth products of the MOS component M1 to the
MOS component M8, an indicator of load capacitance of a load
capacitor component CL, and an indicator of a coupling
capacitor component of a coupling capacitor component Cc

Second parameters of
the MOS component
M1 and the MOS
component M2

Second parameter of
the MOS component
M6

Second parameters of
the MOS component
M3 and the MOS
component M4

Second parameters of
the MOS component
M5 and the MOS
component M8

Second parameter of
the MOS component
M

No

Plurality of second parameters

No

Alternating current
simulation

Non-linear
distortion simulation

Plurality of circuit simulation
results of the first circuit

Plurality of circuit simulation
results of the first circuit

Whether the
plurality of circuit
simulation results of the first
circuit meet a plurality of
indicators of the
first circuit?

Whether the
plurality of circuit
simulation results of the first
circuit meet a plurality of
indicators of the
first circuit?

Yes

Yes

Second circuit

FIG. 10

401: Obtain a first circuit

402: Divide the first circuit to obtain a plurality of subgraphs

403: Obtain an indicator of an electrical parameter of the first circuit diagram

404: Obtain a constraint of each circuit subgraph and an optimization target of each circuit subgraph

405: Decompose the indicator of the electrical parameter of the first circuit diagram based on the constraint of each sub-graph and the optimization target of each circuit sub-diagram, to obtain indicators of electrical parameters of a plurality of first components

406: Determine second parameters of each circuit sub-diagram based on the indicators of the electrical parameters of the plurality of first components, a connection relationship between the plurality of first components, and a component feature of each first component

407: Determine a first circuit sub-diagram and a second circuit sub-diagram from the plurality of circuit sub-diagram based on processing priorities

408: Invoke a process design kit PDK to replace each first component in the first circuit sub-diagram, to obtain a third circuit sub-diagram

TO
FIG. 11 B

FIG. 11A

CONT.
FROM
FIG. 11A

409: Simulate each third component in the third circuit sub-diagram, to obtain a plurality of circuit simulation results of the first circuit sub-diagram

411: Determine that the plurality of circuit simulation results of the first circuit sub-diagram do not meet the indicators of the electrical parameters of the plurality of first components in the first circuit sub-diagram, and re-determine second parameters of the first circuit sub-diagram that are corresponding to first parameters

410: Determine that the plurality of circuit simulation results of the first circuit sub-diagram meet the indicators of the electrical parameters of the plurality of first components in the first circuit sub-diagram, and invoke the process PDK to replace each first component in the second circuit subgraph, to obtain a fourth circuit sub-diagram

412: Simulate each third component in the fourth circuit sub-diagram, to obtain a plurality of circuit simulation results of the second circuit sub-diagram

414: Determine that the plurality of circuit simulation results of the second circuit sub-diagram do not meet the indicators of the electrical parameters of the plurality of first components in the second circuit sub-diagram, and re-determine second parameters of the second circuit sub-diagramthat are corresponding to first parameters

413: Determine that the plurality of circuit simulation results of the second circuit sub-diagram meet the indicators of the electrical parameters of the plurality of first components in the second circuit sub-diagram, and output a second circuit graph based on the second parameters

FIG. 11B

FIG. 12

Plurality of circuit sub-diagram

Design flowchart of a circuit sub-diagram-1

Design flowchart of a circuit sub-diagram-2

Design flowchart of a circuit sub-diagram-3

Design flowchart of a circuit sub-diagram-4

Is an output-stage gain met?

No

Yes

Design flowchart of a circuit sub-diagram-5

Second circuit

FIG. 13

```
┌─────────────────────────────────────────┐
│   Indicators of electrical parameters of first │
│   components in a circuit sub-diagram-1   │
└─────────────────────────────────────────┘
                    │
                    ▼
┌─────────────────────────────────────────┐
│   Determine a gate voltage range of a MOS │
│   component M6 working in a saturation region │
└─────────────────────────────────────────┘
                    │
                    ▼
┌─────────────────────────────────────────┐
│ Determine transconductance and output impedance │
│ that are of the MOS transistor M6 at a plurality of │◄──────┐
│   voltage points in the gate voltage range │        │
└─────────────────────────────────────────┘        │
                    │                               │
                    ▼                               │
              ╱──────────╲                          │
            ╱              ╲                ┌──────────────────┐
          ╱  Is a constraint ╲── No ──────►│  Adjust a process │
          ╲     met?         ╱             │ parameter of the MOS │
            ╲              ╱               │   transistor M6   │
              ╲──────────╱                └──────────────────┘
                    │
                   Yes
                    ▼
┌─────────────────────────────────────────┐
│ Determine target transconductance and target output │
│                impedance                  │
└─────────────────────────────────────────┘
                    │
                    ▼
        ┌───────────────────────┐
        │       Simulate        │
        └───────────────────────┘
                    │
      Plurality of circuit simulation
      results of a first sub-diagram
                    │
                    ▼
```

FIG. 14

```
┌─────────────────────────────────────────────────────────────────────┐
│  Indicators of electrical parameters of first components in a circuit sub-diagram-│
│                                    5                                  │
└─────────────────────────────────────────────────────────────────────┘
                                    │
                                    ▼
┌─────────────────────────────────────────────────────────────────────┐
│           Perform simulation based on a theoretical capacitance value │
└─────────────────────────────────────────────────────────────────────┘
                                    │
                      Plurality of circuit simulation
                      results of a first sub-diagram
                                    │
                                    ▼
```

FIG. 15

## INTERNATIONAL SEARCH REPORT

| International application No. |
| --- |
| **PCT/CN2021/102391** |

| A. | CLASSIFICATION OF SUBJECT MATTER |
| --- | --- |
| | G06F 30/30(2020.01)i |

According to International Patent Classification (IPC) or to both national classification and IPC

| B. | FIELDS SEARCHED |
| --- | --- |

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNABS; CNTXT; WPABSC; CNKI; VEN; DWPI; ENTXT; ENTXTC; WPABS; CJFD: 工艺设计, 电路设计, 电路图, 流程设计, 电路仿真, 器件, 第一参数, 第二参数, 指标, 器件特性, 替换, 转换, 连接关系, PDK, Process Design Kit, circuit, design, flow, simulation, device, first, second, parameter, index, characteristics, replace, subsitute, connection

| C. | DOCUMENTS CONSIDERED TO BE RELEVANT | |
| --- | --- | --- |
| Category* | Citation of document, with indication, where appropriate, of the relevant passages | Relevant to claim No. |
| X | US 8645878 B1 (SUVOLTA INC.) 04 February 2014 (2014-02-04)<br>description, column 5, lines 27-37, column 20, line 40-column 21, line 45, and figures 1A-12 | 1-14 |
| A | CN 109635488 A (NANJING JIUXIN ELECTRONIC TECHNOLOGY CO., LTD.) 16 April 2019 (2019-04-16)<br>entire document | 1-14 |
| A | CN 112417803 A (SUZHOU FOOHU ELECTRONIC TECHNOLOGY CO., LTD.) 26 February 2021 (2021-02-26)<br>entire document | 1-14 |
| A | JP 2017068646 A (JEDAT INC.) 06 April 2017 (2017-04-06)<br>entire document | 1-14 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **07 December 2021** | **24 December 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

| Patent document cited in search report | | | Publication date (day/month/year) | Patent family member(s) | | | Publication date (day/month/year) |
|---|---|---|---|---|---|---|---|
| US | 8645878 | B1 | 04 February 2014 | US | 8806395 | B1 | 12 August 2014 |
| | | | | US | 9117746 | B1 | 25 August 2015 |
| CN | 109635488 | A | 16 April 2019 | CN | 109635488 | B | 12 May 2020 |
| CN | 112417803 | A | 26 February 2021 | None | | | |
| JP | 2017068646 | A | 06 April 2017 | None | | | |